# EUROPEAN PATENT APPLICATION

(11) **EP 4 654 654 A1**
(43) Date of publication of application: **26.11.2025**
(21) Application number: 24749744.9
(22) Date of filing: 02.02.2024
(51) Int. Cl.: H04W 24/08

(54) **COMMUNICATION METHOD AND APPARATUS**

(30) Priority: 03.02.2023 CN 202310104412
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Jiayin, Shenzhen, Guangdong 518129 (CN); WANG, Jun, Shenzhen, Guangdong 518129 (CN)
(74) Representative: Goddar, Heinz J.
(86) International application number: PCT/CN2024/075393
(87) International publication number: WO 2024/160265

(57) **Abstract**

This application provides a communication method and apparatus, and relates to the field of communication technologies. In the communication method, if a first time window overlaps a second time window, a first-type downlink signal is measured within the first time window, and first indication information is sent after the first time window; or second indication information is sent within the second time window, and a second-type downlink signal is measured after the second time window. In this way, a time window for measuring a downlink signal and a time window for sending indication information are coordinated. This helps mitigate a conflict between measurement of the first-type downlink signal and sending of the indication information, helps increase a success rate of measuring the first-type downlink signal and sending the indication information, and therefore can improve communication reliability.

## Description

### CROSS-REFERENCE TO RELATED APPLICATIONS

This application claims priority to Chinese Patent Application No. 202310104412.9, filed with the China National Intellectual Property Administration on February 3, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

A non-terrestrial network (non-terrestrial network, NTN) is proposed in a protocol. The NTN includes a terminal device, a satellite, a base station, and the like. The terminal device may access a network through the satellite and the base station, or the terminal device may access a network through a base station deployed on the satellite. Compared with a terrestrial network (terrestrial network, TN), the NTN can provide a wider coverage area and is not likely to be damaged by a natural disaster or an external force. However, in the NTN, a relative speed between the satellite and the terminal device is high. Consequently, the NTN has a higher communication delay than the TN. Therefore, in the NTN, the terminal device needs to implement uplink synchronization by using a timing advance (timing advance, TA) indicated by signaling from the base station, assistance information, and the like. For example, the assistance information is location information of the terminal device. The terminal device may obtain the assistance information before random access. In addition, after receiving the signaling, the terminal device further needs to send indication information to the base station, where the indication information indicates whether the downlink signaling is successfully decoded.

Currently, it is proposed in the protocol that the terminal device may be triggered, based on an indication of the signaling, to measure a downlink signal, to obtain the assistance information. However, in this case, a time window in which the terminal device sends the indication information to the base station may conflict with a time window in which the terminal device measures the downlink signal. Consequently, the terminal device cannot successfully measure the downlink signal or receive the signaling, and further, the uplink synchronization of the terminal device may fail. Currently, there is no corresponding solution for this problem.

### SUMMARY

Embodiments of this application provide a communication method and apparatus, to avoid a conflict between an information sending process and a downlink signal measurement process.

According to a first aspect, an embodiment of this application provides a communication method. The method may be performed by a first communication apparatus. The first communication apparatus is, for example, a terminal device, and is specifically, for example, a terminal device (for example, an internet of things IoT device) that supports half-duplex communication. Alternatively, the first communication apparatus may be, for example, a software or hardware module (for example, a chip) in a terminal device. This is not limited in this embodiment of this application. The method includes: The first communication apparatus receives first information; determines a first time window and a second time window; and if the first time window overlaps the second time window, measures a first-type downlink signal within the first time window and sends first indication information after the first time window, or sends second indication information within the second time window and measures a second-type downlink signal after the second time window. The first indication information indicates that the first-type downlink signal is successfully measured within the first time window, the first-type downlink signal is not successfully measured within the first time window, or the first information is successfully decoded. The second indication information indicates that the first information is successfully decoded or the first information is not successfully decoded.

Optionally, the first-type downlink signal and the second-type downlink signal may be downlink signals of a same type or downlink signals of different types. The first-type downlink signal may be, for example, a global navigation satellite system GNSS signal or a reference signal. The second-type downlink signal may be, for example, a GNSS signal or a reference signal.

It should be understood that performing a specific operation within a specific time window may be understood as that the time window is configured to be used for performing the specific operation. However, performing the specific operation may actually occupy some or all of time of the time window. This is not specifically limited. Performing the specific operation may actually occupy all of the time of the time window. For example, a start moment of performing the specific operation is a start moment of the time window, and an end moment of performing the specific operation is an end moment of the time window. For example, sending the second indication information within the second time window is: sending the second indication information at a start moment of the second time window, and ending the sending of the second indication information at an end moment of the second time window.

In this embodiment of this application, a possible conflict between measurement of a downlink signal and sending of indication information is considered, and a solution for detecting a conflict between measurement of a downlink signal and sending of indication information is further provided. In addition, when the first time window conflicts with the second time window (in other words, the first time window overlaps the second time window), the first-type downlink signal may be measured within the first time window, and the first indication information is sent after the first time window; or when the first time window conflicts with (in other words, overlaps) the second time window, the second indication information may be sent within the second time window, and the second-type downlink signal is measured after the second time window. In this way, a possibility that a time window for measuring a downlink signal (for example, the first-type downlink signal or the second-type downlink signal) conflicts with a time window for sending information (for example, the first indication information or the second indication information) can be avoided. This helps increase a success rate of measuring a downlink signal and sending indication information by the first communication apparatus, and therefore helps improve communication reliability. In addition, when a measurement result of the first-type downlink signal or the second-type downlink signal is used to implement uplink synchronization (for example, the first-type downlink signal or the second-type downlink signal is a GNSS signal), a success rate of measuring the first-type downlink signal by the first communication apparatus is increased. This helps the first communication apparatus implement uplink synchronization in a timely manner, so that the first communication apparatus and a network side (for example, an access-network network element or a core-network network element) can remain in a persistent connection state.

In a possible implementation, the method further includes: sending third indication information, where the third indication information indicates not to measure the second-type downlink signal within the first time window.

It should be understood that not performing a specific operation within a specific time window may also be described as skipping performing a specific operation within a specific time window. Not performing a specific operation within a specific time window may be understood as releasing the specific time window, or may be understood as that time for performing the operation is not counted based on the specific time window. For example, a time window for performing the operation is different from the specific time window, and the difference includes that the two time windows do not completely overlap or completely do not overlap. For example, not measuring the second-type downlink signal within the first time window may be understood as that a time window for measuring the second-type downlink signal is different from the first time window.

In the foregoing implementation, the first communication apparatus may choose not to measure the second-type downlink signal within the first time window. This helps improve flexibility of measuring the second-type downlink signal. In addition, the first communication apparatus notifies, in a timely manner, the network side that the second-type downlink signal is not to be measured within the first time window, so that both the network side and the first communication apparatus can release the first time window in a timely manner. For example, the network side may further use the first time window for another information exchange process. This helps improve resource utilization.

In a possible implementation, before sending the second indication information within the second time window, the method further includes: determining that the first information is not successfully decoded; and/or determining that remaining validity duration of a first measurement result of the first-type downlink signal is greater than or equal to a first threshold, where the first measurement result is obtained by measuring the first-type downlink signal before the first time window.

In the foregoing implementation, after determining that decoding the first information fails, the first communication apparatus may not measure the first-type downlink signal within the first time window. This can avoid the following case: When the first information carries information for measuring the first-type downlink signal, the first communication apparatus fails to decode the first information and therefore cannot successfully measure the first-type downlink signal. Alternatively, when determining that the remaining validity duration of the first measurement result is long, the first communication apparatus may not measure the first-type downlink signal within the first time window. In this way, the first communication apparatus can perform normal communication based on the first measurement result, and a quantity of times that the first communication apparatus measures the first-type downlink signal can be reduced. This helps reduce an amount of processing performed by the first communication apparatus, and reduce energy consumption of the first communication apparatus. After determining that decoding the first information fails and the remaining validity duration of the first measurement result is long, the first communication apparatus may determine not to measure the first-type downlink signal within the first time window. This can avoid a case that the first communication apparatus cannot successfully measure the first-type downlink signal, and can also reduce an amount of processing performed by the first communication apparatus.

In a possible implementation, before receiving the first information, the method further includes: receiving second information, where the second information indicates that the first information is used to trigger measurement of the first-type downlink signal.

In the foregoing implementation, the first communication apparatus may determine, based on the second information, that the first information is information for triggering measurement of the first-type downlink signal. This is equivalent to that the first communication apparatus predetermines a purpose or a type of the first information. This helps the first communication apparatus determine, earlier, whether to perform, within the first time window, a measurement process triggered by the first information for the first-type downlink signal, and reserves more time for the first communication apparatus to handle a subsequent communication process. In addition, when the first communication apparatus determines not to perform the measurement process triggered by the first information for the first-type downlink signal, the first communication apparatus can notify, earlier, the network side that the second-type downlink signal is not to be measured within the first time window, so that the first communication apparatus and the network side can release the first time window earlier.

In a possible implementation, after sending the second indication information within the second time window, the method further includes: if a condition is met, entering an idle state, where the condition includes: no third information is received within a third time window, where the third information is used to trigger measurement of the first-type downlink signal; and/or the first-type downlink signal is not successfully measured within a fourth time window, where the third time window partially or completely does not overlap the fourth time window.

In the foregoing implementation, if the first communication apparatus cannot successfully measure the first-type downlink signal for a long time, uplink synchronization of the first communication apparatus may fail. Therefore, the first communication apparatus may enter the idle state, to reduce energy consumption caused by attempting, by the first communication apparatus for a long time, to connect to the network side.

In a possible implementation, before sending the second indication information within the second time window, the method further includes: determining that remaining validity duration of a first measurement result of the first-type downlink signal is greater than or equal to a second threshold, where the first measurement result is obtained by measuring the first-type downlink signal before the first time window. Optionally, the first threshold and the second threshold may be any values. For example, the first threshold is greater than the second threshold.

In the foregoing implementation, for example, when the first measurement result is used to assist the first communication apparatus in implementing uplink synchronization, before the second indication information is sent, it can be determined that the remaining validity duration of the first measurement result is long. This can ensure normal communication between the first communication apparatus and the network side, and therefore can increase a success rate of sending the second indication information by the first communication apparatus.

In a possible implementation, before measuring the first-type downlink signal within the first time window, the method further includes: determining that the first information is successfully decoded.

In the foregoing implementation, after successfully decoding the first information, the first communication apparatus may measure the first-type downlink signal within the first time window. In this way, when the first information carries information for measuring the first-type downlink signal, the first communication apparatus can successfully obtain the information for measuring the first-type downlink signal. This helps increase a success rate of measuring the first-type downlink signal by the first communication apparatus.

In a possible implementation, the method further includes: if the first time window completely does not overlap the second time window, measuring the first-type downlink signal within the first time window, and sending the second indication information within the second time window.

In the foregoing implementation, when determining that the first time window does not conflict with the second time window (in other words, the first time window completely does not overlap the second time window), the first communication apparatus measures the first-type downlink signal within the first time window, and sends the second indication information within the second time window. This can ensure that a time window for measuring the first-type downlink signal does not conflict with a time window for sending the second indication information, and therefore increases a success rate of measuring the first-type downlink signal and sending the second indication information.

In a possible implementation, the first information further indicates to trigger measurement of the first-type downlink signal.

In the foregoing implementation, after the first communication apparatus receives the first information, measurement of the first-type downlink signal may be triggered, and no other information needs to be used to indicate to trigger the first-type downlink signal. This helps reduce a quantity of times of data exchange of the first communication apparatus.

In a possible implementation, the first information further indicates at least one of the following: carrying information about the first time window; and/or carrying a resource and/or a format of the second indication information.

In the foregoing implementation, the first information may further indicate more information. In this way, the information does not need to be indicated by using other information. This helps reduce a quantity of times of data exchange of the first communication apparatus.

In a possible implementation, the information about the first time window includes at least one of the following: a start moment of the first time window; an end moment of the first time window; a length of the first time window; a number of a start frame of the first time window and a number of a start subframe of the first time window; a number of an end frame of the first time window and a number of an end subframe of the first time window; or a quantity of subframes included in the first time window.

In the foregoing implementation, a plurality of forms of the information about the first time window are provided, so that forms of the information about the first time window are enriched.

In a possible implementation, the number of the start subframe of the first time window is: a number of the 1^{st} uplink subframe or the 1^{st} downlink subframe after a fifth time window that is after a reference moment; a number of an uplink subframe corresponding to the 1^{st} downlink subframe after a fifth time window that is after a reference moment; the 1^{st} uplink subframe or the 1^{st} downlink subframe after the fifth time window; or a number of an uplink subframe or a downlink subframe with a minimum time interval from a moment after a fifth time window that is after a reference moment, where the reference moment is a moment at which receiving of the first information ends or a moment at which sending of the second indication information ends.

In the foregoing implementation, a plurality of possibilities of the number of the start subframe of the first time window are provided. In addition, the number of the start subframe of the first time window may be configured in a protocol. In this way, the first communication apparatus does not need to obtain the number of the start subframe of the first time window from the network side. This helps reduce a quantity of times of data exchange between the first communication apparatus and the network side.

In a possible implementation, the start moment of the first time window is: a moment after a fifth time window that is after a reference moment, where the reference moment is a moment at which receiving of the first information ends or a moment at which sending of the second indication information ends. In this implementation, the start moment of the first time window may be understood as, for example, an end moment at which the fifth time window has elapsed since the reference moment that is used as a start moment. For example, being after the fifth time window may be understood as being after an end moment of the fifth time window.

In the foregoing implementation, the start moment of the first time window may be configured in a protocol. In this way, the first communication apparatus does not need to obtain the start moment of the first time window from the network side. This helps reduce an amount of data exchanged between the first communication apparatus and the network side.

In a possible implementation, when the first indication information indicates that the first-type downlink signal is successfully measured within the first time window or the first-type downlink signal is not successfully measured within the first time window, the first indication information may specifically indicate that the first-type downlink signal is successfully measured within a plurality of time windows or the first-type downlink signal is not successfully measured, where the plurality of time windows include the first time window.

In the foregoing implementation, the first indication information may indicate response results of measuring the first-type downlink signal within the plurality of time windows. This helps reduce a quantity of times of data exchange between the first communication apparatus and the network side.

In a possible implementation, before receiving the first information, the method further includes: receiving first signaling, where the first signaling indicates information about the first time window. Optionally, the first signaling is, for example, radio resource control RRC signaling or MAC CE signaling.

In the foregoing implementation, a manner of obtaining the information about the first time window by the first communication apparatus is provided. In addition, in a possible case, both the first information and the first signaling may indicate the information about the first time window. In this case, the first communication apparatus may be triggered by the first information to measure the first-type downlink signal, instead of measuring the first-type downlink signal after receiving the first signaling. This can improve, to some extent, flexibility of time at which the first communication apparatus measures the first-type downlink signal.

In a possible implementation, a time window for sending the first indication information is determined by the first communication apparatus, or is obtained by the first communication apparatus from the network side. For ease of description, in this embodiment of this application, an example in which the first communication apparatus sends the first indication information within a sixth time window is used for description.

In a possible implementation, a time window for measuring the second-type downlink signal is determined by the first communication apparatus, or is obtained by the first communication apparatus from the network side. For ease of description, in this embodiment of this application, an example in which the first communication apparatus measures the second-type downlink signal within a seventh time window is used for description.

In a possible implementation, when the time window for sending the first indication information is determined by the first communication apparatus, or when the time window for measuring the second-type downlink signal is determined by the first communication apparatus, the method further includes: determining that an overlapping part between the first time window and the second time window is less than or equal to preset first duration. The preset first duration may be prestored on the first communication apparatus. For example, the preset first duration may be preconfigured on the first communication apparatus by using a protocol.

In the foregoing implementation, when the overlapping part between the first time window and the second time window is small, the first communication apparatus may determine the sixth time window or the seventh time window, to send the first indication information or measure the second-type downlink signal. In this way, when the first indication information is successfully sent or the second-type downlink signal is successfully measured, a quantity of times of interaction between the first communication apparatus and the network side can be further reduced.

In a possible implementation, when the time window for sending the first indication information is obtained by the first communication apparatus from the network side, or when the time window for measuring the second-type downlink signal is obtained by the first communication apparatus from the network side, the method further includes: determining that an overlapping part between the first time window and the second time window is greater than preset first duration. For a manner of obtaining the preset first duration by the first communication apparatus, refer to the foregoing descriptions.

In the foregoing implementation, when the overlapping part between the first time window and the second time window is large, the network side may configure the sixth time window or the seventh time window for the first communication apparatus, to ensure that the first communication apparatus successfully sends the first indication information or measures the second-type downlink signal.

According to a second aspect, an embodiment of this application provides a communication method. The method may be performed by a second communication apparatus. The second communication apparatus is, for example, an access-network network element or a core-network network element. The access-network network element is, for example, a base station. Alternatively, the second communication apparatus may be, for example, a software or hardware module (for example, a chip) in the access-network network element. Alternatively, the second communication apparatus may be, for example, a software or hardware module in the core-network network element. This is not limited in this embodiment of this application. The method includes: The second communication apparatus sends first information; and sends a first-type downlink signal within a first time window, and receives first indication information after the first time window; or receives second indication information within a second time window, and sends a second-type downlink signal after the second time window. The first time window overlaps the second time window. The first indication information indicates that the first-type downlink signal is successfully measured within the first time window, the first-type downlink signal is not successfully measured within the first time window, or the first information is successfully decoded. The second indication information indicates that the first information is successfully decoded or the first information is not successfully decoded.

In a possible implementation, before receiving the second indication information within the second time window, the method further includes: receiving third indication information, where the third indication information indicates not to measure the second-type downlink signal within the first time window.

In a possible implementation, before sending the first information, the method further includes: sending second information, where the second information indicates that the first information is used to trigger measurement of the first-type downlink signal.

In a possible implementation, before sending the first information, the method further includes: sending first signaling, where the first signaling indicates information about the first time window.

In a possible implementation, the first indication information indicates that the first-type downlink signal is successfully measured within a plurality of time windows or the first-type downlink signal is not successfully measured, where the plurality of time windows include the first time window.

In a possible implementation, the first-type downlink signal and the second-type downlink signal are global navigation satellite system GNSS signals or reference signals.

According to a third aspect, an embodiment of this application provides a communication method. The method may be performed by a first communication apparatus. The first communication apparatus is, for example, a terminal device. Alternatively, the first communication apparatus may be, for example, a software or hardware module (for example, a chip) in a terminal device. This is not limited in this embodiment of this application. The method includes: The first communication apparatus receives first signaling, where the first signaling indicates information about a first time window, and the first time window is used for measuring a first-type downlink signal; receives first information; and sends second indication information within a second time window, where the second time window does not overlap the first time window, and the second indication information indicates that the first information is successfully decoded or the first information is not successfully decoded. Optionally, the first-type downlink signal may be, for example, a global navigation satellite system GNSS signal or a reference signal.

In this embodiment of this application, the first time window and the second time window that do not conflict with each other may be configured for the first communication apparatus. In this way, the first communication apparatus can directly measure the first-type downlink signal within the first time window, and send the second indication information within the second time window. This can avoid a conflict between measuring the first-type downlink signal and sending the second indication information. This helps increase a success rate of measuring the first-type downlink signal and sending the first indication information by the first communication apparatus, and therefore helps improve communication reliability. In addition, when the first-type downlink signal and the second-type downlink signal are GNSS signals, a success rate of measuring the first-type downlink signal is increased. This helps the first communication apparatus implement uplink synchronization in a timely manner, so that the first communication apparatus can remain in a persistent connection state.

In a possible implementation, the first information further indicates to trigger measurement of the first-type downlink signal.

In a possible implementation, the first information further indicates at least one of the following: carrying information about the first time window; and/or carrying a resource and/or a format of the second indication information.

In a possible implementation, the information about the first time window includes at least one of the following: a start moment of the first time window; an end moment of the first time window; a length of the first time window; a number of a start frame of the first time window and a number of a start subframe of the first time window; a number of an end frame of the first time window and a number of an end subframe of the first time window; or a quantity of subframes included in the first time window.

In a possible implementation, the start moment of the first time window is: a moment after a fifth time window that is after a reference moment, where the reference moment is a moment at which receiving of the first information ends or a moment at which sending of the second indication information ends.

In a possible implementation, the number of the start subframe of the first time window is: a number of the 1^{st} uplink subframe or the 1^{st} downlink subframe after a fifth time window that is after a reference moment; a number of an uplink subframe corresponding to the 1^{st} downlink subframe after a fifth time window that is after a reference moment; the 1^{st} uplink subframe or the 1^{st} downlink subframe after the fifth time window; or a number of an uplink subframe or a downlink subframe with a minimum time interval from a moment after a fifth time window that is after a reference moment, where the reference moment is a moment at which receiving of the first information ends or a moment at which sending of the second indication information ends.

According to a fourth aspect, an embodiment of this application provides a communication method. The method may be performed by a second communication apparatus. The second communication apparatus is, for example, an access-network network element or a core-network network element. The access-network network element is, for example, a base station. Alternatively, the second communication apparatus may be, for example, a software or hardware module (for example, a chip) in the access-network network element. Alternatively, the second communication apparatus may be, for example, a software or hardware module in the core-network network element. This is not limited in this embodiment of this application. The method includes: sending first signaling, where the first signaling indicates information about a first time window, and the first time window is used for measuring a first-type downlink signal; sending first information; and sending second indication information within a second time window, where the second time window does not overlap the first time window, and the second indication information indicates that the first information is successfully decoded or the first information is not successfully decoded.

In a possible implementation, the first information further indicates to trigger measurement of the first-type downlink signal.

In a possible implementation, the first information further indicates at least one of the following: carrying information about the first time window; and/or carrying a resource and/or a format of the second indication information.

In a possible implementation, the information about the first time window includes at least one of the following: a start moment of the first time window; an end moment of the first time window; a length of the first time window; a number of a start frame of the first time window and a number of a start subframe of the first time window; a number of an end frame of the first time window and a number of an end subframe of the first time window; or a quantity of subframes included in the first time window.

In a possible implementation, the start moment of the first time window is: a moment after a fifth time window that is after a reference moment, where the reference moment is a moment at which receiving of the first information ends or a moment at which sending of the second indication information ends.

In a possible implementation, the number of the start subframe of the first time window is: a number of the 1^{st} uplink subframe or the 1^{st} downlink subframe after a fifth time window that is after a reference moment; a number of an uplink subframe corresponding to the 1^{st} downlink subframe after a fifth time window that is after a reference moment; the 1^{st} uplink subframe or the 1^{st} downlink subframe after the fifth time window; or a number of an uplink subframe or a downlink subframe with a minimum time interval from a moment after a fifth time window that is after a reference moment, where the reference moment is a moment at which receiving of the first information ends or a moment at which sending of the second indication information ends.

According to a fifth aspect, an embodiment of this application provides a communication method. The method may be performed by a first communication apparatus. The first communication apparatus is, for example, a terminal device. Alternatively, the first communication apparatus may be, for example, a software or hardware module (for example, a chip) in a terminal device. This is not limited in this embodiment of this application. The method includes: receiving first information and/or second information, where the second information indicates that the first information is used to trigger measurement of a first-type downlink signal, and the first information indicates information about a first time window; and sending third indication information, where the third indication information indicates not to measure the first-type downlink signal within the first time window.

In this embodiment of this application, the first communication apparatus may not measure the first-type downlink signal within the first time window. This improves flexibility of measuring the first-type downlink signal by the first communication apparatus. In addition, the first communication apparatus may notify, in a timely manner, a network side that the first-type downlink signal is not to be measured within the first time window, so that the network side can release the first time window in a timely manner. This helps improve resource utilization.

In a possible implementation, before sending the third indication information, the method further includes: determining that the first time window overlaps a second time window and/or the first information is not successfully decoded, where the second time window is used for sending second indication information, and the second indication information indicates that the first information is successfully decoded or the first information is not successfully decoded; and/or determining that remaining validity duration of a first measurement result of the first-type downlink signal is greater than or equal to a first threshold, where the first measurement result is obtained by measuring the first-type downlink signal before a start moment of the first time window.

According to a sixth aspect, an embodiment of this application provides a communication method. The method may be performed by a second communication apparatus. The second communication apparatus is, for example, an access-network network element or a core-network network element. The access-network network element is, for example, a base station. Alternatively, the second communication apparatus may be, for example, a software or hardware module (for example, a chip) in the access-network network element. Alternatively, the second communication apparatus may be, for example, a software or hardware module in the core-network network element. This is not limited in this embodiment of this application. The method includes: sending first information and/or second information, where the second information indicates that the first information is used to trigger measurement of a first-type downlink signal, and the first information indicates information about a first time window; and receiving third indication information, where the third indication information indicates not to measure the first-type downlink signal within the first time window.

According to a seventh aspect, an embodiment of this application provides a communication apparatus. The communication apparatus may be the first communication apparatus in the first aspect, or a software module, a hardware module (for example, a chip), or the like configured in the first communication apparatus. The communication apparatus includes a corresponding means (means) or module for performing any one of the first aspect or the possible implementations. For example, the communication apparatus includes a processing module (sometimes also referred to as a processing unit) and a transceiver module (sometimes also referred to as a transceiver unit).

For example, the transceiver module is configured to receive first information; the processing module is configured to determine a first time window and a second time window; and the transceiver module is further configured to: if the first time window overlaps the second time window, measure a first-type downlink signal within the first time window and send first indication information after the first time window, or send second indication information within the second time window and measure a second-type downlink signal after the second time window. The first indication information indicates that the first-type downlink signal is successfully measured within the first time window, the first-type downlink signal is not successfully measured within the first time window, or the first information is successfully decoded. The second indication information indicates that the first information is successfully decoded or the first information is not successfully decoded.

According to an eighth aspect, an embodiment of this application provides a communication apparatus. The communication apparatus may be the second communication apparatus in the second aspect, or a software module, a hardware module (for example, a chip), or the like configured in the second communication apparatus. The communication apparatus includes a corresponding means (means) or module for performing any one of the second aspect or the possible implementations. For example, the communication apparatus includes a processing module (sometimes also referred to as a processing unit) and a transceiver module (sometimes also referred to as a transceiver unit).

For example, the transceiver module is configured to send first information under the control of the processing module; and the transceiver module is further configured to: send a first-type downlink signal within a first time window, and receive first indication information after the first time window; or receive second indication information within a second time window, and send a second-type downlink signal after the second time window. The first time window overlaps the second time window. The first indication information indicates that the first-type downlink signal is successfully measured within the first time window, the first-type downlink signal is not successfully measured within the first time window, or the first information is successfully decoded. The second indication information indicates that the first information is successfully decoded or the first information is not successfully decoded.

According to a ninth aspect, an embodiment of this application provides a communication apparatus. The communication apparatus may be the first communication apparatus in the third aspect, or a software module, a hardware module (for example, a chip), or the like configured in the first communication apparatus. The communication apparatus includes a corresponding means (means) or module for performing any one of the third aspect or the possible implementations. For example, the communication apparatus includes a processing module (sometimes also referred to as a processing unit) and a transceiver module (sometimes also referred to as a transceiver unit).

For example, the transceiver module is configured to: receive first signaling under the control of the processing module, where the first signaling indicates information about a first time window, and the first time window is used for measuring a first-type downlink signal; receive first information; and send second indication information within a second time window, where the second time window does not overlap the first time window, and the second indication information indicates that the first information is successfully decoded or the first information is not successfully decoded.

According to a tenth aspect, an embodiment of this application provides a communication apparatus. The communication apparatus may be the second communication apparatus in the fourth aspect, or a software module, a hardware module (for example, a chip), or the like configured in the second communication apparatus. The communication apparatus includes a corresponding means (means) or module for performing any one of the fourth aspect or the possible implementations. For example, the communication apparatus includes a processing module (sometimes also referred to as a processing unit) and a transceiver module (sometimes also referred to as a transceiver unit).

For example, the transceiver module is configured to send first signaling under the control of the processing module, where the first signaling indicates information about a first time window, and the first time window is used for measuring a first-type downlink signal; send first information; and send second indication information within a second time window, where the second time window does not overlap the first time window, and the second indication information indicates that the first information is successfully decoded or the first information is not successfully decoded.

According to an eleventh aspect, an embodiment of this application provides a communication apparatus. The communication apparatus may be the first communication apparatus in the fifth aspect, or a software module, a hardware module (for example, a chip), or the like configured in the first communication apparatus. The communication apparatus includes a corresponding means (means) or module for performing any one of the fifth aspect or the possible implementations. For example, the communication apparatus includes a processing module (sometimes also referred to as a processing unit) and a transceiver module (sometimes also referred to as a transceiver unit).

For example, the transceiver module is configured to: receive first information and/or second information under the control of the processing module, where the second information indicates that the first information is used to trigger measurement of a first-type downlink signal, and the first information indicates information about a first time window; and send third indication information, where the third indication information indicates not to measure the first-type downlink signal within the first time window.

According to a twelfth aspect, an embodiment of this application provides a communication apparatus. The communication apparatus may be the second communication apparatus in the sixth aspect, or a software module, a hardware module (for example, a chip), or the like configured in the second communication apparatus. The communication apparatus includes a corresponding means (means) or module for performing any one of the sixth aspect or the possible implementations. For example, the communication apparatus includes a processing module (sometimes also referred to as a processing unit) and a transceiver module (sometimes also referred to as a transceiver unit).

For example, the transceiver module is configured to: send first information and/or second information under the control of the processing module, where the second information indicates that the first information is used to trigger measurement of a first-type downlink signal, and the first information indicates information about a first time window; and receive third indication information, where the third indication information indicates not to measure the first-type downlink signal within the first time window.

According to a thirteenth aspect, an embodiment of this application provides a communication system. The communication system includes the communication apparatus according to the seventh aspect and the communication apparatus according to the eighth aspect.

According to a fourteenth aspect, an embodiment of this application provides a communication system. The communication system includes the communication apparatus according to the ninth aspect and the communication apparatus according to the tenth aspect.

According to a fifteenth aspect, an embodiment of this application provides a communication system. The communication system includes the communication apparatus according to the eleventh aspect and the communication apparatus according to the twelfth aspect.

According to a sixteenth aspect, an embodiment of this application provides a communication apparatus, including a processor and a communication interface. The communication interface is configured to receive a signal from an apparatus other than the communication apparatus and transmit the signal to the processor, or send a signal that comes from the processor to an apparatus other than the communication apparatus. The processor executes code instructions through a logic circuit, to implement the method according to any one of the first aspect to the sixth aspect.

Optionally, the communication apparatus further includes other components, for example, an antenna or an input/output module. The components may be hardware, software, or a combination of software and hardware.

According to a seventeenth aspect, an embodiment of this application provides a chip system. The chip system includes a processor and an interface. The processor is configured to invoke instructions from the interface and run the instructions. When the processor executes the instructions, the method according to any one of the first aspect to the sixth aspect is implemented.

According to an eighteenth aspect, an embodiment of this application provides a computer-readable storage medium. The computer-readable storage medium is configured to store a computer program or computer instructions. When the computer program or the computer instructions is/are run, the method according to any one of the first aspect to the sixth aspect is implemented.

According to a nineteenth aspect, an embodiment of this application provides a computer program product including instructions. When the computer program product is run on a computer, the method according to any one of the first aspect to the sixth aspect is implemented.

For beneficial effects of the second aspect to the nineteenth aspect, refer to the beneficial effects described in the first aspect. Details are not described herein again.

### BRIEF DESCRIPTION OF DRAWINGS

FIG. 1 is a diagram of a time window;
FIG. 2 is a diagram of a scenario to which embodiments of this application are applicable;
FIG. 3 is a diagram of another scenario to which embodiments of this application are applicable;
FIG. 4 is a diagram of still another scenario to which embodiments of this application are applicable;
FIG. 5 is a diagram of a communication method according to an embodiment of this application;
FIG. 6A is a diagram of a first time window according to an embodiment of this application;
FIG. 6B is a diagram of another first time window according to an embodiment of this application;
FIG. 7 is a diagram of still another first time window according to an embodiment of this application;
FIG. 8A is a diagram of yet another first time window according to an embodiment of this application;
FIG. 8B is a diagram of yet another first time window according to an embodiment of this application;
FIG. 9 is a diagram of a time sequence of measuring a first-type downlink signal and sending first indication information according to an embodiment of this application;
FIG. 10 is a diagram of a time sequence of measuring a second-type downlink signal and sending second indication information according to an embodiment of this application;
FIG. 11 is a diagram of a time sequence of measuring a first-type downlink signal and sending second indication information according to an embodiment of this application;
FIG. 12 is a diagram of another communication method according to an embodiment of this application;
FIG. 13 is a diagram of a time sequence of measuring a first-type downlink signal and sending second indication information according to an embodiment of this application;
FIG. 14 is a diagram of still another communication method according to an embodiment of this application;
FIG. 15 is a diagram of a structure of a communication apparatus according to an embodiment of this application; and
FIG. 16 is a diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to facilitate understanding of a person skilled in the art.
1. A terminal device is a device with a wireless transceiver function, and may be a stationary device, a mobile device, a handheld device, a wearable device, a vehicle-mounted device, or a built-in wireless apparatus (for example, a communication module or a chip system) of the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine type communication (machine-to-machine/machine type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like. When the terminal device is used in the IoT scenario, the terminal device may be referred to as an IoT device.
2. An access-network network element is a device with a wireless transceiver function, and is configured to communicate with the terminal device. The access-network network element includes but is not limited to a base station (BTS, NodeB, eNodeB/eNB, or gNodeB/gNB) or a transmission and reception point (transmission and reception point, TRP) in the foregoing communication system, a future evolved 3GPP base station, an access node in a wireless fidelity (wireless fidelity, Wi-Fi) system, a wireless relay node, a wireless backhaul node, a satellite (or a satellite base station), an uncrewed aerial vehicle, or the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission and reception points. The network device may alternatively be a radio controller, a central unit (central unit, CU), which may also be referred to as an aggregation unit, and/or a distributed unit (distributed unit, DU) in a cloud radio access network (cloud radio access network, C(R)AN) scenario. The network device may alternatively be a server, a wearable device, a vehicle-mounted device, or the like. For example, a network device in the vehicle-to-everything (vehicle-to-everything, V2X) technology may be a roadside unit (roadside unit, RSU). An example in which the access network device is a base station is used below for description. A plurality of network devices in the communication system may be base stations of a same type, or may be base stations of different types. The base station may communicate with the terminal device, or may communicate with the terminal device through a relay station. The terminal device may communicate with a plurality of base stations in different access technologies.
   A core-network network element is configured to implement at least one of the following functions: mobility management, data processing, session management, policy and charging, and the like. Names of devices that implement core network functions in systems of different access technologies may be different. This is not limited in embodiments this application. A 5th generation (5th generation, 5G) communication system is used as an example. The core-network network element includes an access and mobility management function (access and mobility management function, AMF), a session management function (session management function, SMF), a policy control function (policy control function, PCF), a user plane function (user plane function, UPF), or the like.
3. An apparatus may be a single device, or may be an apparatus integrating a plurality of devices. The apparatus may alternatively be a logical concept, for example, a software module, or a network function corresponding to a service provided by each network element. The network function may be understood as a virtualized function in virtualization implementation, or may be understood as a network function that provides a service in a service-oriented network, for example, a session management function specially configured to manage a session in a core network. This is not specifically limited in embodiments of this application.

In embodiments of this application, a quantity of a noun indicates "a singular noun or a plural noun", namely, "one or more", unless otherwise specified. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects. For example, A/B indicates A or B. "At least one of the following items" or a similar expression thereof indicates any combination of the items, including one of the items or any combination of a plurality of the items. For example, at least one of a, b, or c indicates a, b, c, a and b, a and c, b and c, or a, b, and c, where a, b, and c may be in a singular form or a plural form.

In a satellite system, because a relative speed between a terminal device and a satellite is high, to implement uplink synchronization, the terminal device not only needs a TA indicated by a base station, but also needs location information of the satellite and location information of the terminal device. The terminal device may determine a location of the satellite by using an ephemeris, and may also obtain the location information of the terminal device by measuring a global navigation satellite system (global navigation satellite system, GNSS) signal. The location information of the terminal device includes, for example, one or more of a coordinate location, a longitude and a latitude, and an altitude of the terminal device in a world coordinate system.

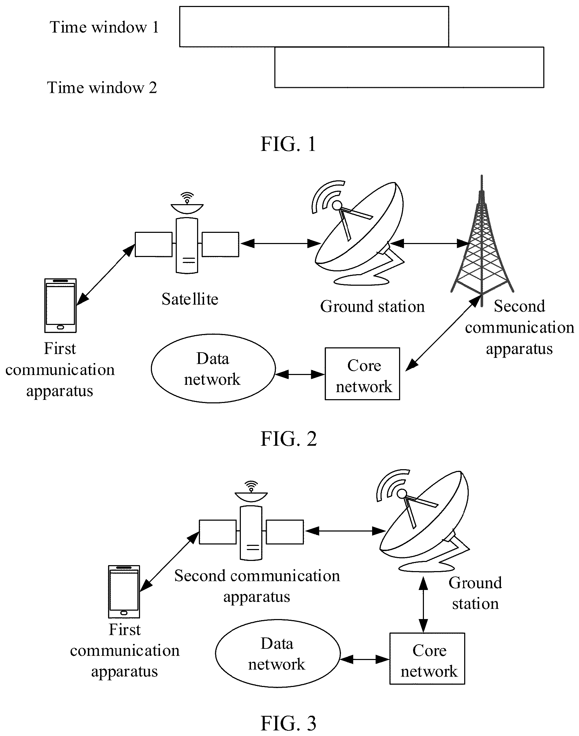

For example, the base station may indicate, by using media access control address (media access control address, MAC) control element (control element, CE) signaling, a time window used for the terminal device to measure the GNSS signal. FIG. 1 is a diagram of a time window. In FIG. 1, the time window for measuring the GNSS signal is, for example, a time window 1 shown in FIG. 1.

After receiving the MAC CE signaling, the terminal device may decode the MAC CE signaling. If the terminal device successfully decodes the MAC CE signaling, the terminal device may measure the GNSS signal within the time window 1. An example in which the terminal device is configured to feed back, within a time window 2 shown in FIG. 1, indication information corresponding to the MAC CE signaling is used below for description.

As shown in FIG. 1, because the time window 1 partially overlaps the time window 2 and the terminal device supports only half-duplex communication, the terminal device cannot simultaneously measure the GNSS signal and send the indication information corresponding to the MAC CE signaling. Consequently, the terminal device may fail to measure the GNSS signal, and/or fail to send the indication information corresponding to the MAC CE signaling. Consequently, the terminal device obtains the location information of the terminal device, and the uplink synchronization fails.

In view of this, embodiments of this application provide a communication method. In the method, a first communication apparatus (for example, a terminal device) may determine whether a first time window for measuring a first-type downlink signal overlaps a second time window for sending second indication information. If the first time window overlaps the second time window, the first communication apparatus may measure the first-type downlink signal, and delay sending first indication information; or send the second indication information, and delay sending the second indication information. This avoids a conflict between measuring the first-type downlink signal and sending the indication information by the first communication apparatus, and increases a success rate of measuring the first-type downlink signal and sending the indication information. In addition, when a measurement result of measuring the first-type downlink signal is used to implement uplink synchronization, an increase in a success rate of measuring the first-type downlink signal is equivalent to an increase in a success rate of implementing uplink synchronization by the terminal device.

The communication method in embodiments of this application is applicable to any satellite system, for example, a satellite system in a 5G scenario, or a satellite-terrestrial converged communication system. This is not limited in embodiments of this application.

FIG. 2 is a diagram of a scenario to which embodiments of this application are applicable. Alternatively, FIG. 2 may be understood as a diagram of an architecture of a satellite system (or network). As shown in FIG. 2, the scenario includes a first communication apparatus, a satellite, a ground station, a second communication apparatus, a core network (core network, CN), and a data network (data network, DN). In FIG. 2, an example in which the second communication apparatus and the satellite are separately deployed is used for description. All of the satellite, the ground station, the second communication apparatus, the core network, and the data network belong to a network side.

As shown in FIG. 2, the first communication apparatus communicates with the satellite. For example, the first communication apparatus may communicate with the satellite through an air interface. The air interface is, for example, a 5G air interface. For example, the first communication apparatus may initiate a call service or an internet access service to the satellite. The first communication apparatus is, for example, a terminal device. The terminal device is, for example, a mobile phone or an IoT device. The satellite may forward signaling and/or data between the first communication apparatus and the ground station. Optionally, the satellite may forward the signaling and/or the data between the first communication apparatus and the ground station in a transparent transmission mode.

The ground station forwards signaling, data, and/or the like between the satellite and the second communication apparatus. Optionally, the ground station may forward the signaling, the data, and/or the like between the satellite and the second communication apparatus in a transparent transmission mode or a non-transparent transmission mode. The ground station may communicate with the satellite through an air interface, and the ground station may also communicate with the second communication apparatus. The second communication apparatus may communicate with the core network through an NG interface. The NG interface may be configured to transmit non-access stratum (non-access stratum, NAS) signaling, user service-related data, and the like. The second communication apparatus is configured to provide an access service, for example, is an access-network network element. For an implementation of the access-network network element, refer to the foregoing descriptions. The core network may include one or more core-network network elements. The core network further communicates with the data network.

FIG. 3 is a diagram of another scenario to which embodiments of this application are applicable. Alternatively, FIG. 3 may be understood as a diagram of an architecture of another satellite system (or network). As shown in FIG. 3, the scenario includes a first communication apparatus, a second communication apparatus, a ground station, a core network, and a data network. All of the second communication apparatus, the ground station, the core network, and the data network may belong to a network side. Different from FIG. 2, in FIG. 3, an example in which the second communication apparatus is deployed on a satellite is used. In this case, the second communication apparatus may also be referred to as a satellite, a satellite base station, or the like.

As shown in FIG. 3, the first communication apparatus may communicate with the second communication apparatus through an air interface, and the second communication apparatus may communicate with the ground station through an NG interface. The ground station may communicate with the core network through an NG interface. The core network may communicate with the data network.

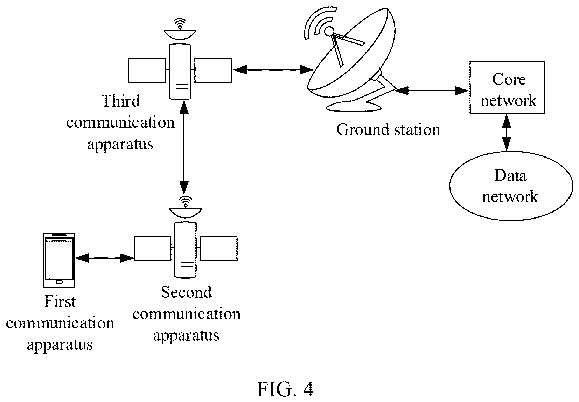

FIG. 4 is a diagram of still another scenario to which embodiments of this application are applicable. Alternatively, FIG. 4 may be understood as a diagram of an architecture of another satellite system (or network), or may be considered as a diagram of an architecture of a satellite-terrestrial converged system (or network). As shown in FIG. 4, the scenario includes a first communication apparatus, a second communication apparatus, a third communication apparatus, a ground station, a core network, and a data network. All of the second communication apparatus, the third communication apparatus, the ground station, the core network, and the data network may belong to a network side. Different from FIG. 3, in FIG. 4, the first communication apparatus accesses a network through the second communication apparatus and the third communication apparatus. The second communication apparatus may communicate with the third communication apparatus through an Xn interface. The third communication apparatus is configured to provide an access service, for example, is an access-network network element. For an implementation of the access-network network element, refer to the foregoing descriptions.

Optionally, any one of the first communication apparatuses in FIG. 2 to FIG. 4 may be a communication apparatus supporting half-duplex communication.

The following describes the communication method provided in embodiments of this application with reference to the accompanying drawings.

During description of embodiments of this application, the technical solutions in embodiments of this application are applicable to any one of scenarios in FIG. 2 to FIG. 4. In embodiments of this application, an example in which a first communication apparatus interacts with a second communication apparatus on a network side is used. In embodiments of this application, for example, the first communication apparatus is any one of the first communication apparatuses in FIG. 2 to FIG. 4, the second communication apparatus is any one of the second communication apparatuses in FIG. 2 to FIG. 4, a ground station is any one of the ground stations in FIG. 2 to FIG. 4, and a satellite is any one of the satellites in FIG. 2 to FIG. 4. It should be understood that, if the technical solutions provided in embodiments of this application are applied to another scenario, a name, a function, and/or the like of a network element, a device, or an apparatus may vary. This is not limited in embodiments of this application.

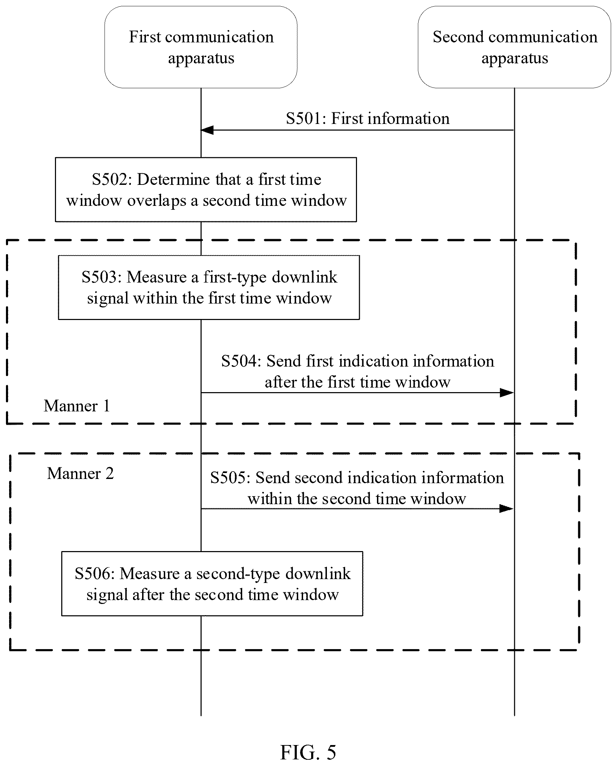

FIG. 5 is a diagram of a communication method according to an embodiment of this application. The diagram includes the following steps.

S501: A second communication apparatus sends first information to a first communication apparatus. Correspondingly, the first communication apparatus receives the first information from the second communication apparatus.

For example, in the scenario shown in FIG. 3 or FIG. 4, the second communication apparatus may directly send the first information to the first communication apparatus. Alternatively, in the scenario shown in FIG. 2, the second communication apparatus may send the first information to the first communication apparatus through the ground station and the satellite sequentially. The first information may be signaling, for example, MAC CE signaling or other signaling. Alternatively, the first information may be information for carrying downlink data, but not signaling. The first information may indicate at least one of the following A1 to A5, which are separately described below.

A1: The first information indicates to trigger measurement of a first-type downlink signal.

The first-type downlink signal may be, for example, a GNSS signal or a reference signal. The reference signal is, for example, a demodulation reference signal (demodulation reference signal, DMRS) or a channel state information reference signal (channel state information reference signal, CSI-RS). This is not specifically limited in this embodiment of this application.

For example, the first information includes M bits, where M is a positive integer. The M bits indicate to trigger the first communication apparatus to measure the first-type downlink signal.

Alternatively, the first information may indicate information for measuring the first-type downlink signal, and the information for measuring the first-type downlink signal indirectly indicates to trigger measurement of the first-type downlink signal. The information for measuring the first-type downlink signal is information related to measurement of the first-type downlink signal, for example, a resource for measuring the first-type downlink signal. The resource includes, for example, a time domain resource and/or a frequency domain resource. Information about the time domain resource for measuring the first-type downlink signal is, for example, information about a first time window.

In this embodiment of this application, an example in which the information about the time domain resource for measuring the first-type downlink signal includes the information about the first time window is used. In this example, the first time window may be understood as being used for measuring the first-type downlink signal, or may be understood as time at which the first-type downlink signal is measured. Measuring the first-type downlink signal includes a process of receiving the first-type downlink signal. Optionally, measuring the first-type downlink signal further includes a process of obtaining a measurement result of the first-type downlink signal based on the first-type downlink signal.

It should be understood that the time window in this embodiment of this application may be a continuous period of time. Therefore, in this embodiment of this application, the time window may also be referred to as a time period.

A2: The first information indicates information about a first time window.

For a meaning of the first time window, refer to the foregoing content. The information about the first time window includes at least one (or one type) of the following B1 to B6.

B1: A start moment of the first time window. In this embodiment of this application, the start moment may also be referred to as a starting moment.

Optionally, the start moment of the first time window may be represented by a number of a start frame of the first time window and a number of a start subframe of the first time window. In this case, the number of the start frame of the first time window and the number of the start subframe of the first time window are equivalent to an implementation form of the start moment of the first time window.

B2: An end moment of the first time window. In this embodiment of this application, the end moment may also be referred to as an ending moment.

Optionally, the end moment of the first time window may be represented by a number of an end frame of the first time window and a number of an end subframe of the first time window. In this case, the number of the end frame of the first time window and the number of the end subframe of the first time window are equivalent to an implementation form of the end moment of the first time window.

B3: A length of the first time window. The length of the first time window may also be referred to as duration, a size, or the like of the first time window.

Optionally, the length of the first time window may be represented by a quantity of subframes in the first time window. In this case, the quantity of subframes in the first time window is equivalent to an implementation form of the length of the first time window.

B4: A number of a start frame of the first time window and a number of a start subframe of the first time window. In this embodiment of this application, the start frame may also be referred to as a starting frame, and the start subframe may also be referred to as a starting subframe.

B5: A number of an end frame of the first time window and a number of an end subframe of the first time window. In this embodiment of this application, the end frame may also be referred to as an ending frame, and the end subframe may also be referred to as an ending subframe.

B6: A quantity of subframes included in the first time window.

A3: The first information indicates a resource and/or a format of first indication information.

The first indication information indicates a response result of measuring the first-type downlink signal by the first communication apparatus within the first time window and/or that the first communication apparatus has successfully decoded the first information. The response result indicates that the first-type downlink signal is successfully measured or the first-type downlink signal is not successfully measured. Optionally, the first indication information may indicate the response result of measuring the first-type downlink signal within the first time window, to indirectly indicate that the first communication apparatus has successfully decoded the first information. Alternatively, the first indication information may indicate a measurement result (which may be referred to as, for example, a second measurement result) of measuring the first-type downlink signal, to indirectly indicate that the first-type downlink signal is successfully measured within the first time window.

The resource of the first indication information includes a time domain resource and/or a frequency domain resource of the first indication information, and the time domain resource of the first indication information is, for example, a time window for sending the first indication information. The format of the first indication information indicates, for example, a quantity of bits occupied by the first indication information and/or an information item. For example, the first indication information is carried in a narrowband physical uplink shared channel (narrowband physical uplink shared channel, NPUSCH) in a format 1 or an NPUSCH in a format 2. The NPUSCH in the format 1 may be denoted as an NPUSCH1 for short, and the NPUSCH in the format 2 may be denoted as an NPUSCH2 for short.

A4: The first information indicates a resource and/or a format of second indication information.

The resource of the second indication information includes a frequency domain resource and/or a time domain resource of the second indication information. The time domain resource of the second indication information includes, for example, a second time window for sending the second indication information.

The second indication information indicates that the first communication apparatus has successfully decoded the first information, for example, indicates an acknowledgement (acknowledgement, ACK). Alternatively, the second indication information indicates that the first information is not successfully decoded, for example, indicates a negative acknowledgement (negative acknowledgement, NACK). That the second indication information indicates that the first information is not successfully decoded means that the first communication apparatus has received the first information, but failed to decode the first information.

The format of the second indication information includes, for example, a quantity of bits occupied by the second indication information and/or an information item. For example, the second indication information is carried in an NPUSCH1 or an NPUSCH2.

A5: A TA. The TA is used to implement uplink synchronization.

In a possible implementation, before performing S501, the second communication apparatus may send first signaling to the first communication apparatus. The first signaling indicates information about the first time window. For content of the information about the first time window, refer to the foregoing descriptions. The first signaling is, for example, radio resource control (radio resource control, RRC) signaling or MAC CE signaling.

Optionally, the first signaling may indicate information about P time windows. The P time windows may be used for measuring the first-type downlink signal, and the P time windows include the first time window. P is an integer greater than 1. The plurality of time windows may be periodically distributed or aperiodically distributed. This is not limited in this embodiment of this application.

For example, regardless of whether the first information indicates the information about the first time window, the first signaling may indicate the information about the first time window. For example, that the first signaling indicates the information about the P time windows and the first information indicates the information about the first time window may be understood as that the first information indicates the first communication apparatus to measure the first-type downlink signal within the first time window among the P time windows. This is equivalent to that the first signaling reserves a plurality of resources for measuring the first-type downlink signal, but the first information triggers a specific resource for measuring the first-type downlink signal. For another example, when the first signaling indicates the information about the P time windows and the first information does not indicate the information about the first time window, the first information may indicate only to trigger measurement of the first-type downlink signal, and the first communication apparatus may use, as the first time window, a time window among the P time windows with a minimum time interval from a moment at which the first information is received. In this case, the first information may be considered as indirectly indicating information about the first time window.

In a possible implementation, before performing S501, the second communication apparatus may send second information to the first communication apparatus. Correspondingly, the first communication apparatus may receive the second information from the second communication apparatus.

The second information indicates that the first information is used to trigger measurement of the first-type downlink signal. This is equivalent to that the second information indicates a purpose (or type) of the first information. In this way, the first communication apparatus can determine the purpose (or type) of the first information without decoding the first information.

S502: The first communication apparatus determines that the first time window overlaps the second time window.

The first communication apparatus may determine the first time window and the second time window, and determine whether the first time window overlaps the second time window. A manner of determining the first time window and the second time window by the first communication apparatus varies with content of the first information. A manner of determining the first time window by the first communication apparatus is used below as an example for description.
1. The first communication apparatus determines the first time window based on the first information.

In a possible implementation, if the first information indicates the content shown in A2 (to be specific, the first information indicates the information about the first time window), the first communication apparatus may directly determine the first time window based on the information about the first time window that is indicated by the first information.

For example, the information about the first time window that is indicated by the first information includes at least one of B2 and B3, and at least one of B5 and B6; or the information about the first time window that is indicated by the first information includes at least one of B1 and B4, and at least one of B5 and B6; or the information about the first time window that is indicated by the first information includes at least one of B1 and B4, and at least one of B2 and B3; or the information about the first time window that is indicated by the first information includes at least one of B1 and B4, at least one of B2 and B3, and at least one of B5 and B6. In these cases, the first communication apparatus may determine the first time window based on the information about the first time window that is indicated by the first information.

In another possible implementation, the first communication apparatus may determine the first time window based on a starting moment of the first time window or a number of a start subframe of the first time window that is configured in a protocol, and the information about the first time window that is indicated by the first information.

For example, if the information about the first time window that is indicated by the first information includes at least one of B2, B3, B5, and B6, the first communication apparatus may determine the first time window based on the starting moment of the first time window or the number of the start subframe of the first time window that is configured in the protocol, and the information about the first time window that is indicated by the first information.

In the foregoing implementation, the starting moment of the first time window may be configured in the protocol. In this way, the first information may indicate less information about the first time window. This helps reduce an amount of data exchanged between the first communication apparatus and the second communication apparatus.

Possible cases of the starting moment of the first time window that is configured in the protocol are separately described below.

For example, the starting moment of the first time window is a moment after a fifth time window that is after a reference moment. The reference moment is a moment at which the first communication apparatus ends receiving the first information or a moment at which the first communication apparatus ends sending the second indication information. Alternatively, the starting moment of the first time window is the 1^{st} uplink subframe or the 1^{st} downlink subframe after a fifth time window that is after a reference moment, or the starting moment of the first time window is an uplink subframe corresponding to the 1^{st} downlink subframe after a fifth time window that is after the reference moment. The fifth time window may also be considered as continuous duration. Therefore, the fifth time window may be referred to as preset second duration. The fifth time window may be configured on the first communication apparatus by using a protocol.

The number, configured in the protocol, of the start subframe of the first time window may include the following C1 to C7, which are separately described below.

C1: The number of the start subframe of the first time window is a number of the 1^{st} downlink subframe after a fifth time window that is after a reference moment.

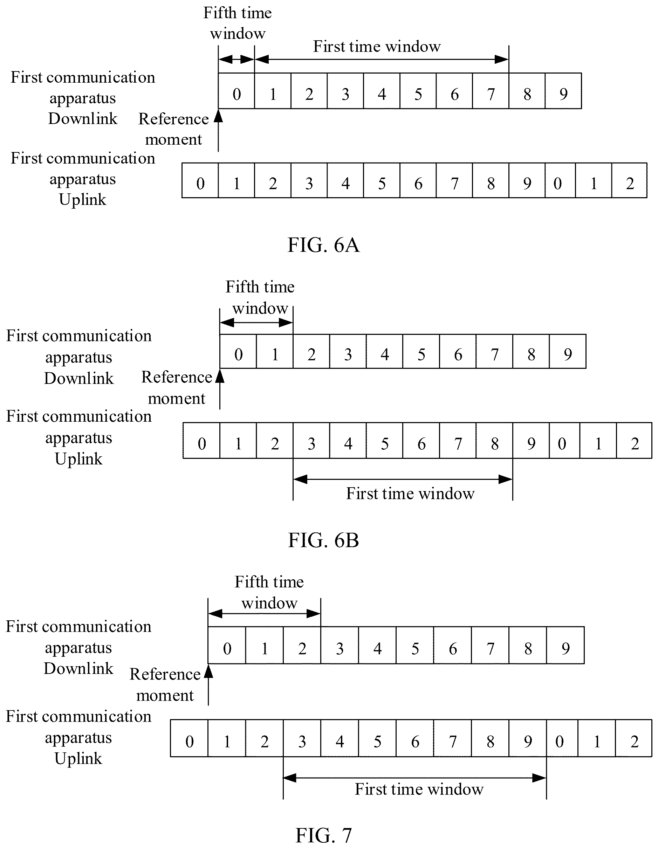

For example, FIG. 6A is a diagram of a first time window according to an embodiment of this application. As shown in FIG. 6A, the number of the start subframe of the first time window is a number of the 1^{st} downlink subframe (for example, a downlink subframe 1) after the fifth time window (for example, from a start moment of a downlink subframe 0 to an end moment of the downlink subframe 0) that is after the reference moment (for example, the start moment of the downlink subframe 0). The first time window specifically includes the subframe 1 to a subframe 7.

C2: The number of the start subframe of the first time window is a number of the 1^{st} uplink subframe after a fifth time window that is after a reference moment.

For example, FIG. 6B is a diagram of a first time window according to an embodiment of this application. As shown in FIG. 6B, the number of the start subframe of the first time window is a number of the 1^{st} uplink subframe (for example, an uplink subframe 3) after the fifth time window (for example, from a start moment of a downlink subframe 0 to an end moment of a downlink subframe 1) that is after the reference moment (for example, the start moment of the downlink subframe 0). The first time window specifically includes the subframe 3 to a subframe 8.

C3: The number of the start subframe of the first time window is a number of an uplink subframe corresponding to the 1^{st} downlink subframe after a fifth time window that is after a reference moment.

For example, the uplink subframe corresponding to the 1^{st} downlink subframe may be an uplink subframe with a same number as that of the 1^{st} downlink subframe, or may be an uplink subframe with a minimum time interval from the 1^{st} downlink subframe.

For example, FIG. 7 is a diagram of a first time window according to an embodiment of this application. As shown in FIG. 7, the number of the start subframe of the first time window is the number of the uplink subframe (for example, an uplink subframe 3) corresponding to the 1^{st} downlink subframe (for example, a downlink subframe 3) after the fifth time window (for example, from a start moment of a downlink subframe 0 to an end moment of a downlink subframe 2) that is after the reference moment (for example, the start moment of the downlink subframe 0). The first time window specifically includes the subframe 3 to a subframe 9.

C4: The 1^{st} uplink subframe after a fifth time window.

C5: The 1^{st} downlink subframe after a fifth time window.

C6: A number of an uplink subframe with a minimum time interval from a moment after a fifth time window that is after a reference moment.

In this example, the first communication apparatus selects, as the number of the start subframe of the first time window, a number of an uplink subframe closest to the moment after the fifth time window that is after the reference moment. In this case, the start moment of the first time window may be within the fifth time window or beyond the fifth time window.

For example, the first communication apparatus may determine the start subframe of the first time window by using any moment of an uplink subframe as a reference. The any moment is, for example, a start moment of the uplink subframe. For example, the first communication apparatus determines, from a plurality of start moments, a start moment closest to the moment after the fifth time window that is after the reference moment, and determines an uplink subframe corresponding to the start moment as the start subframe of the first time window. The plurality of start moments are start moments of a plurality of uplink subframes. This may also be understood as that each of the plurality of start moments corresponds to one of the plurality of uplink subframes.

Alternatively, the any moment is, for example, an end moment of the uplink subframe. For example, the first communication apparatus may determine the start subframe of the first time window by using an end moment of a subframe as a reference. For example, the first communication apparatus determines, from a plurality of end moments, an end moment closest to the moment after the fifth time window that is after the reference moment, and determines an uplink subframe corresponding to the end moment as the start subframe of the first time window. The plurality of end moments are end moments of a plurality of uplink subframes. This may also be understood as that each of the plurality of end moments corresponds to one of the plurality of uplink subframes.

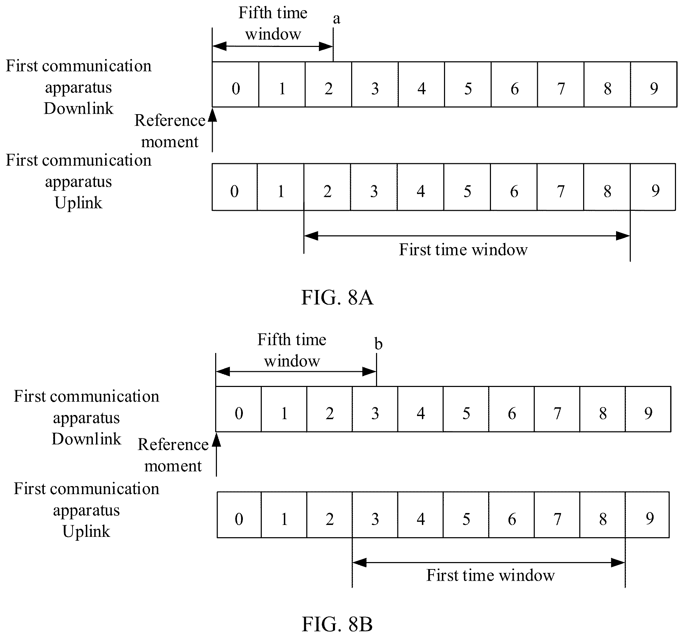

For example, FIG. 8A is a diagram of a first time window according to an embodiment of this application. As shown in FIG. 8A, the reference moment is, for example, a start moment of a downlink subframe 0, and the fifth time window includes, for example, the start moment of the downlink subframe 0 to an intermediate moment a in a downlink subframe 2. The first communication apparatus determines that an uplink subframe closest to the intermediate moment a in the downlink subframe 2 is an uplink subframe 2, and therefore may determine that the number of the start subframe of the first time window is 2. The first time window specifically includes the intermediate moment a in the subframe 2 to a subframe 8.

C7: A number of a downlink subframe with a minimum time interval from a moment after a fifth time window that is after a reference moment.

In this example, the first communication apparatus selects, as the number of the start subframe of the first time window, a number of a downlink subframe closest to the moment after the fifth time window that is after the reference moment. In this case, the start moment of the first time window may be within the fifth time window or beyond the fifth time window.

For example, the first communication apparatus may determine the start subframe of the first time window by using any moment of a downlink subframe as a reference. The any moment is, for example, a start moment of the downlink subframe. For example, the first communication apparatus determines, from a plurality of start moments, a start moment closest to the moment after the fifth time window that is after the reference moment, and determines a downlink subframe corresponding to the start moment as the start subframe of the first time window. The plurality of start moments are start moments of a plurality of downlink subframes. This may also be understood as that each of the plurality of start moments corresponds to one of the plurality of downlink subframes.

Alternatively, the any moment is, for example, an end moment of the downlink subframe. The first communication apparatus may determine the start subframe of the first time window by using an end moment of a subframe as a reference. For example, the first communication apparatus determines, from a plurality of end moments, an end moment closest to the moment after the fifth time window that is after the reference moment, and determines a downlink subframe corresponding to the end moment as the start subframe of the first time window. The plurality of end moments are end moments of a plurality of downlink subframes. This may also be understood as that each of the plurality of end moments corresponds to one of the plurality of downlink subframes.

For example, FIG. 8B is a diagram of a first time window according to an embodiment of this application. As shown in FIG. 8B, the reference moment is, for example, a start moment of a downlink subframe 0, and the fifth time window includes, for example, the start moment of the downlink subframe 0 to an intermediate moment b in a downlink subframe 3. The first communication apparatus determines that a downlink subframe closest to the intermediate moment b in the downlink subframe 3 is a downlink subframe 3, and therefore may determine that the number of the start subframe of the first time window is 3. The first time window specifically includes the intermediate moment b in the subframe 3 to a subframe 8.

It should be understood that, if an uplink subframe and a downlink subframe that have a same number are aligned, to be specific, start moments of the uplink subframe and the downlink subframe that have the same number are the same, and end moments of the uplink subframe and the downlink subframe that have the same number are also the same, the number of the 1^{st} downlink subframe after the fifth time window that is after the reference moment may be the same as the number of the uplink subframe corresponding to the 1^{st} downlink subframe after the fifth time window that is after the reference moment.

2. The first communication apparatus determines the first time window based on fourth information.

In a possible implementation, the second communication apparatus may send the fourth information to the first communication apparatus, where the fourth information indicates information about the first time window; and the first communication apparatus may determine the first time window based on the fourth information. When the second communication apparatus sends the first signaling to the first communication apparatus, or when the second communication apparatus does not send the first signaling to the first communication apparatus, the second communication apparatus may send the fourth information to the first communication apparatus. This is not limited in this embodiment of this application.

For the information about the first time window, refer to the foregoing descriptions. For a form of the fourth information, refer to the form of the first information in the foregoing descriptions. For a manner of sending the fourth information by the second communication apparatus to the first communication apparatus, refer to the foregoing content about sending the first information by the second communication apparatus to the first communication apparatus.

For example, the information about the first time window that is indicated by the fourth information includes at least one of B2 and B3, and at least one of B5 and B6; or the information about the first time window that is indicated by the fourth information includes at least one of B1 and B4, and at least one of B5 and B6; or the information about the first time window that is indicated by the fourth information includes at least one of B1 and B4, and at least one of B2 and B3; or the information about the first time window that is indicated by the fourth information includes at least one of B1 and B4, at least one of B2 and B3, and at least one of B5 and B6. In these cases, the first communication apparatus may determine the first time window based on the information about the first time window that is indicated by the fourth information.

In another possible implementation, if the information about the first time window that is indicated by the fourth information includes one of B2, B3, B5, and B6, the first communication apparatus may determine the first time window based on the fourth information and a starting moment of the first time window or a number of a start subframe of the first time window that is configured in a protocol. For content of the starting moment of the first time window or the number of the start subframe of the first time window, refer to the foregoing content.

For a manner of determining the second time window by the first communication apparatus, refer to the foregoing content about determining the first time window by the first communication apparatus. Details are not described herein again. After determining the first time window and the second time window, the first communication apparatus may determine whether the first time window overlaps the second time window. The following provides descriptions based on different cases.

### Case 1:

The first time window overlaps the second time window. In other words, the first time window partially or completely overlaps the second time window.

For example, it can be considered, in the following case, that the first time window overlaps the second time window: The start moment of the first time window is the same as a start moment of the second time window, and the end moment of the first time window is the same as an end moment of the second time window; or the start moment of the first time window is earlier than a start moment of the second time window, the end moment of the first time window is earlier than an end moment of the second time window, and the start moment of the first time window is earlier than the end moment of the second time window; or a start moment of the second time window is earlier than the start moment of the first time window, an end moment of the second time window is earlier than the end moment of the first time window, and the start moment of the second time window is earlier than the end moment of the first time window; or a starting moment of the second time window is earlier than the starting moment of the first time window, and an end moment of the second time window is later than the starting moment of the first time window; or the starting moment of the first time window is earlier than a starting moment of the second time window, and the end moment of the first time window is later than the starting moment of the second time window.

In the case 1, the first communication apparatus may handle a subsequent communication process in a manner 1 or a manner 2. The manner 1 and the manner 2 are separately described below.

### Manner 1:

The first communication apparatus may perform step S503, to be specific, measure the first-type downlink signal within the first time window.

In S503, the first communication apparatus receives the first-type downlink signal within the first time window. Optionally, the first communication apparatus further obtains the second measurement result of the first-type downlink signal within the first time window based on the first-type downlink signal.

In a possible implementation, the first communication apparatus may perform step S503 after determining that the first information is successfully decoded.

For example, when the first information indicates the information (for example, the information about the first time window) for measuring the first-type downlink signal and the first communication apparatus successfully decodes the first information, the first communication apparatus may determine the first time window. Therefore, the first communication apparatus may measure the first-type downlink signal within the first time window, to increase a success rate of measuring the first-type downlink signal.

When the first information does not indicate the information (for example, the information about the first time window) for measuring the first-type downlink signal, whether the first communication apparatus successfully decodes the first information does not affect measurement of the first-type downlink signal by the first communication apparatus. Therefore, the first communication apparatus may perform step S503 regardless of whether the first communication apparatus successfully decodes the first information.

After S503, the first communication apparatus may further perform S504: The first communication apparatus sends the first indication information to the second communication apparatus after the first time window. Correspondingly, the second communication apparatus receives the first indication information from the first communication apparatus after the first time window.

Being after the first time window is, for example, being after the end moment of the first time window. A moment after the first time window may be within the second time window or beyond the second time window. This is not specifically limited in this embodiment of this application.

For ease of description, in this embodiment of this application, an example in which the first communication apparatus sends the first indication information within a sixth time window is used for description.

For example, for a meaning of the first indication information, refer to the foregoing descriptions. For example, in the scenario shown in FIG. 3 or FIG. 4, the first communication apparatus may directly send the first indication information to the second communication apparatus. Alternatively, in the scenario shown in FIG. 2, the first communication apparatus may send the first indication information to the second communication apparatus through the satellite and the ground station sequentially.

The sixth time window may be determined by the first communication apparatus. For example, a start moment of the sixth time window is a moment at which an eighth time window has elapsed since the first time window, and a length of the eighth time window may be configured on the first communication apparatus by using a protocol, or the first communication apparatus may determine that a length of the eighth time window is a length of an overlapping part between the first time window and the second time window. Certainly, the length of the eighth time window that is configured by using the protocol may be any length, for example, may be the length of the overlapping part between the first time window and the second time window. Optionally, the length of the sixth time window may be the same as that of the second time window.

Optionally, the first communication apparatus may determine the sixth time window when the overlapping part between the first time window and the second time window is less than or equal to preset first duration. The preset first duration may be prestored on the first communication apparatus, for example, may be configured on the first communication apparatus by using a protocol.

Because the overlapping part between the first time window and the second time window is small, the first communication apparatus may fine-tune a time window for sending the first indication information, to reduce impact on another communication process, ensure successful sending of the first indication information, and also reduce a quantity of times of interaction between the first communication apparatus and the second communication apparatus.

Alternatively, the sixth time window may be obtained by the first communication apparatus from the second communication apparatus. This is not specifically limited in this embodiment of this application. For example, the second communication apparatus indicates information about the sixth time window to the first communication apparatus by using fifth information. For an implementation form of the fifth information, refer to the foregoing content of the first information. For content of the information about the sixth time window, refer to the foregoing content of the information about the first time window. Details are not described herein again. In addition, for a manner of sending the fifth information by the second communication apparatus, refer to the foregoing content about sending the first information by the second communication apparatus.

Optionally, the first communication apparatus may obtain the sixth time window from the second communication apparatus when the overlapping part between the first time window and the second time window is greater than preset first duration.

In a possible implementation, the first communication apparatus may measure the first-type downlink signal within a plurality of time windows. In this case, the first indication information may indicate response results of measuring the first-type downlink signal within the plurality of time windows. For a meaning of the response results, refer to the foregoing descriptions. The plurality of time windows include the first time window. Optionally, when the first signaling indicates the P time windows, the plurality of time windows may be some of the P time windows, or the plurality of time windows are the P time windows.

For example, the first indication information includes N bits, and a value of N is a quantity of the plurality of time windows. Each of the N bits may indicate a response result within one of the plurality of time windows.

Alternatively, the first indication information includes N bits, where N is a positive integer. For example, a value of N is 1. The N bits indicate the response results of measuring the first-type downlink signal within the plurality of time windows. For example, values of the N bits are a result of performing a logical AND operation on the response results of measuring the first-type downlink signals within the plurality of time windows.

In the manner 1, when the first communication apparatus determines (or detects) that the first time window conflicts with the second time window, the first communication apparatus may measure the first-type downlink signal within the first time window, and does not directly send the first indication information within the second time window, but sends the first indication information after the first time window. This is equivalent to staggering, to some extent, time at which the first-type downlink signal is measured and time at which the first indication information is sent. This helps avoid a conflict between a process of measuring the first-type downlink signal and a process of sending the first indication information.

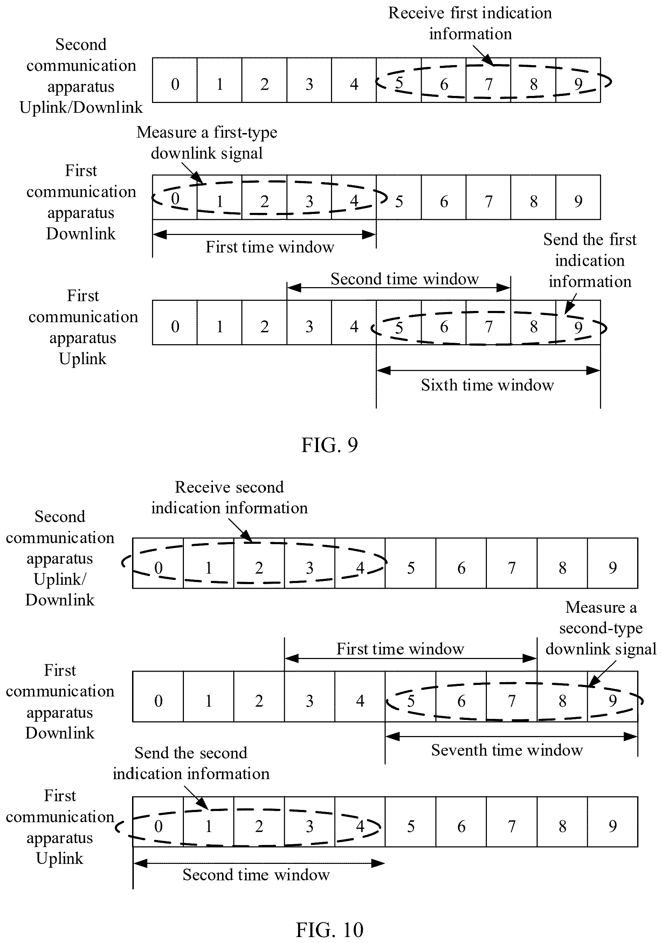

FIG. 9 is a diagram of a time sequence of measuring the first-type downlink signal and sending the first indication information according to an embodiment of this application. Alternatively, FIG. 9 may be understood as a diagram of a time sequence of measuring the first-type downlink signal and sending the first indication information in the manner 1.

As shown in FIG. 9, the first time window is a subframe 0 to a subframe 4 in a frame 1, and the second time window is a subframe 3 to a subframe 7 in the frame 1. The first communication apparatus determines that the first time window overlaps the second time window. Therefore, the first communication apparatus measures the first-type downlink signal within the first time window. The first communication apparatus sends the first indication information to the second communication apparatus after the first time window (for example, within a sixth time window in FIG. 9). Correspondingly, the second communication apparatus receives the first indication information from the first communication apparatus within the sixth time window. As shown in FIG. 9, the sixth time window is a subframe 5 to a subframe 9 in the frame 1. It can be learned from FIG. 9 that the first communication apparatus measures the first-type downlink signal within the first time window, and sends the first indication information within the sixth time window. This avoids a conflict between time at which the first-type downlink signal is measured and time at which the first indication information is sent.

### Manner 2:

The first communication apparatus may perform S505: The first communication apparatus sends the second indication information to the second communication apparatus within the second time window. For a meaning of the second indication information, refer to the foregoing descriptions. For a manner of sending the second indication information by the first communication apparatus to the second communication apparatus in S505, refer to the foregoing content about sending the first indication information by the first communication apparatus to the second communication apparatus.

A second-type downlink signal and the first-type downlink signal may be downlink signals of a same type or downlink signals of different types. For example, both the first-type downlink signal and the second-type downlink signal are GNSS signals; or the first-type downlink signal is a GNSS signal, and the second-type downlink signal is a CSI-RS.

If the first communication apparatus does not receive the first information, the first communication apparatus cannot perform a decoding process on the first information. In this case, the first communication apparatus does not need to perform step S505. When the second communication apparatus does not receive the second indication information after preset third duration elapses, the second communication apparatus may retransmit the first information. The preset third duration may be obtained by the first communication apparatus from the second communication apparatus, or may be preconfigured on the first communication apparatus by using a protocol.

Optionally, the first indication information may alternatively indicate response results of measuring the first-type downlink signal within a plurality of time windows. For a meaning of the response results, content of the plurality of time windows, and a manner of indicating, by the first indication information, the response results of measuring the first-type downlink signal within the plurality of time windows, refer to the foregoing content.

After performing S505, the first communication apparatus may perform S506: The first communication apparatus measures the second-type downlink signal after the second time window. For a manner of measuring the second-type downlink signal, refer to the foregoing content about measuring the first-type downlink signal.

Being after the second time window is, for example, being after the end moment of the second time window. A moment after the second time window may be within the first time window or beyond the first time window. This is not specifically limited in this embodiment of this application.

For ease of description, in this embodiment of this application, an example in which the first communication apparatus measures the second-type downlink signal within a seventh time window is used for description.

The seventh time window may be determined by the first communication apparatus. This is not specifically limited in this embodiment of this application. A start moment of the seventh time window may be a moment at which a ninth time window has elapsed since the second time window. Optionally, a length of the seventh time window may be the same as the length of the first time window.

The length of the ninth time window may be configured on the first communication apparatus by using a protocol, or the first communication apparatus may determine that the length of the ninth time window is a length of an overlapping part between the first time window and the second time window. Certainly, the length of the ninth time window that is configured by using the protocol may be any length, for example, may be the length of the overlapping part between the first time window and the second time window.

Alternatively, the seventh time window may be obtained by the first communication apparatus from the second communication apparatus. For obtaining, by the first communication apparatus from the second communication apparatus, a time window for measuring the second-type downlink signal, refer to the foregoing content about obtaining, by the first communication apparatus, the sixth time window from the second communication apparatus. Details are not described herein again.

Optionally, the first communication apparatus may determine the seventh time window when the overlapping part between the first time window and the second time window is less than or equal to preset first duration. Alternatively, the first communication apparatus may obtain the seventh time window from the second communication apparatus when the overlapping part between the first time window and the second time window is greater than preset first duration.

In the manner 2, when the first communication apparatus determines (or detects) that the first time window conflicts with the second time window, the first communication apparatus may send the second indication information within the second time window, and does not directly measure the second-type downlink signal within the first time window, but measures the second-type downlink signal after the second time window. This is equivalent to staggering, to some extent, time at which the first-type downlink signal is measured and time at which the first indication information is sent. This helps avoid a conflict between a process of measuring the first-type downlink signal and a process of sending the first indication information. In addition, when the second-type downlink signal and the first-type downlink signal are not downlink signals of a same type, the first communication apparatus may further avoid a conflict between time at which the second-type downlink signal is measured and time at which the first indication information is sent. This helps improve communication reliability for the first communication apparatus.

To increase a success rate of sending the second indication information by the first communication apparatus, before performing S505, the first communication apparatus may alternatively determine that remaining validity duration of a first measurement result of the first-type downlink signal is greater than or equal to a second threshold. In this implementation, the first communication apparatus can ensure that the first measurement result still has specific validity duration, to avoid a case that the first communication apparatus fails to send the second indication information due to a failure of uplink synchronization.

The first measurement result is obtained by measuring the first-type downlink signal before the first time window, and the first measurement result may be understood as a historical measurement result of the first-type downlink signal. The second threshold may be obtained by the first communication apparatus from the second communication apparatus. For example, the second threshold is carried in the first information or the fourth information. Alternatively, the second threshold may be preconfigured on the first communication apparatus by using a protocol.

FIG. 10 is a diagram of a time sequence of measuring the second-type downlink signal and sending the second indication information according to an embodiment of this application.

As shown in FIG. 10, the first time window is a subframe 3 to a subframe 7 in a frame 1, and the second time window is a subframe 0 to a subframe 4 in the frame 1. The first communication apparatus determines that the first time window overlaps the second time window. Therefore, the first communication apparatus sends the second indication information within the second time window. Correspondingly, the second communication apparatus receives the second indication information from the first communication apparatus within the second time window. The first communication apparatus measures the second-type downlink signal after the second time window (for example, within a seventh time window in FIG. 10). As shown in FIG. 10, the seventh time window is a subframe 5 to a subframe 9 in the frame 1. It can be learned from FIG. 10 that the first communication apparatus sends the second indication information within the second time window, and measures the first-type downlink signal within the seventh time window. This avoids a conflict between time at which the second-type downlink signal is measured and time at which the second indication information is sent.

In a first possible implementation, the first communication apparatus may perform step S505 after determining that the first information is not successfully decoded.

For example, the first information indicates the information (for example, the information about the first time window) for measuring the first-type downlink signal, and the first communication apparatus does not successfully decode the first information, and therefore cannot determine the first time window. Alternatively, the first information does not indicate the information (for example, the information about the first time window) for measuring the first-type downlink signal, and the first communication apparatus determines that the first information is not successfully decoded, but the first communication apparatus determines that feedback of the second indication information is more important. In this case, the first communication apparatus may perform step S505 without measuring the first-type downlink signal within the first time window.

In a second possible implementation, the first communication apparatus expects to perform step S505 after skipping measuring the first-type downlink signal within the first time window. In this implementation, the first communication apparatus does not need to consider whether the first information is successfully decoded. To be specific, even if the first communication apparatus does not successfully decode the first information, or even if the first information is successfully decoded, the first communication apparatus may still perform step S505 after skipping measuring the first-type downlink signal within the first time window. In the foregoing implementation, the first communication apparatus may properly choose to skip measuring the second-type downlink signal. This not only can resolve a conflict between time at which the first communication apparatus measures the second-type downlink signal and time at which the first communication apparatus sends the second indication information, but also helps improve flexibility of measuring the second-type downlink signal by the first communication apparatus.

For example, the first communication apparatus determines that remaining validity duration of a first measurement result of the first-type downlink signal is greater than or equal to a first threshold. This indicates that the remaining validity duration of the first measurement result is still long. Therefore, the first communication apparatus may determine that the first-type downlink signal does not need to be measured within the first time window. Further, the first communication apparatus may perform step S505 without measuring the first-type downlink signal within the first time window.

The remaining validity duration of the first measurement result may be prestored on the first communication apparatus, or may be obtained by the first communication apparatus from the second communication apparatus. For a meaning of the first measurement result, refer to the foregoing descriptions. For a manner of obtaining the first threshold by the first communication apparatus, refer to the foregoing manner of obtaining the second threshold by the first communication apparatus.

Optionally, the first threshold and the second threshold may be any values. For example, the first threshold is equal to the second threshold, the first threshold may be greater than the second threshold, or the first threshold is less than the second threshold.

In a third possible implementation, the first communication apparatus may perform step S505 after determining that the first information is not successfully decoded and the first communication apparatus expects to skip measuring the first-type downlink signal within the first time window.

Optionally, the first communication apparatus may send third indication information to the second communication apparatus after the first communication apparatus determines not to measure the first-type downlink signal within the first time window. Correspondingly, the second communication apparatus may receive the third indication information from the first communication apparatus. The third indication information indicates that the first communication apparatus does not measure the second-type downlink signal within the first time window.

For example, after decoding the first information, the first communication apparatus may determine that the first information is used to trigger measurement of the first-type downlink signal, determine that the first-type downlink signal is not expected to be measured within the first time window, and send the third indication information to the second communication apparatus. Alternatively, after the first communication apparatus receives the second information, even if the first communication apparatus does not decode the first information, the first communication apparatus may still send the third indication information to the second communication apparatus when determining that the first-type downlink signal is not expected to be measured within the first time window. In this case, the first communication apparatus may determine, earlier, whether the second-type downlink signal needs to be measured within the first time window.

In the foregoing optional implementation, the first communication apparatus notifies, in a timely manner, the second communication apparatus that the first-type downlink signal is not to be measured within the first time window. This helps release the first time window in a timely manner, and helps improve resource utilization of the second communication apparatus.

The first communication apparatus may enter an idle state when a specific condition is met, without performing step S506. Alternatively, the first communication apparatus may enter an idle state when a specific condition is met, and perform step S506 after switching from the idle state to an active state.

The condition includes, for example, that the first communication apparatus receives no third information within a third time window, and/or that the first communication apparatus does not successfully measure the first-type downlink signal within the fourth time window. The third information indicates to trigger measurement of the first-type downlink signal. For a manner of indicating, by the third information, to trigger measurement of the first-type downlink signal, refer to the foregoing content about indicating, by the first information, to trigger measurement of the first-type downlink signal. The third time window is different from (or does not completely overlap) the fourth time window. In other words, the third time window may partially or completely not overlap the fourth time window. A process of entering the idle state by the first communication apparatus varies with the condition. The following separately provides descriptions.

B1: The condition includes that the first communication apparatus receives no third information within the third time window.

In the condition shown in B1, after sending the second indication information, the first communication apparatus attempts to receive the third information. That the first communication apparatus receives no third information within the third time window indicates that a communication link between the first communication apparatus and the second communication apparatus may be abnormal, or the second communication apparatus determines that the first communication apparatus does not need to measure the first-type downlink signal. Therefore, the first communication apparatus may enter the idle state, to reduce energy consumption of the first communication apparatus.

B2: The condition includes that the first-type downlink signal is not successfully measured within the fourth time window.

In the condition shown in B2, after sending the second indication information, the first communication apparatus attempts to measure the first-type downlink signal. In this case, the first communication apparatus may measure the first-type downlink signal within an idle time window or a preset time window. That the first communication apparatus does not successfully measure the first-type downlink signal within the fourth time window indicates that uplink synchronization of the first communication apparatus may have failed. Therefore, the first communication apparatus may enter the idle state.

B3: The condition includes that the first communication apparatus receives no third information within the third time window and does not successfully measure the first-type downlink signal within the fourth time window, where a start moment of the third time window is earlier than a start moment of the fourth time window, and an end moment of the third time window is earlier than or the same as an end moment of the fourth time window.

In the condition shown in B3, after sending the second indication information, the first communication apparatus attempts to receive the third information; and if no third information is received within the third time window, the first communication apparatus may attempt to measure the first-type downlink signal within the fourth time window. If the first communication apparatus does not successfully measure the first-type downlink signal within the fourth time window, the first communication apparatus may enter the idle state.

B4: The condition includes that the first communication apparatus receives no third information within the third time window and does not successfully measure the first-type downlink signal within the fourth time window, where a start moment of the fourth time window is earlier than a start moment of the third time window, and an end moment of the fourth time window is earlier than or the same as an end moment of the third time window.

In the condition shown in B4, after sending the second indication information, the first communication apparatus attempts to measure the first-type downlink signal within the fourth time window; and if the first-type downlink signal is not successfully measured within the fourth time window, the first communication apparatus may attempt to receive the third information within the third time window. If the first communication apparatus receives no third information within the third time window, the first communication apparatus may enter the idle state.

### Case 2:

The first time window does not overlap the second time window. In other words, the first time window completely does not overlap the second time window.

In a possible implementation, in the case 2 (which indicates that the first time window does not conflict with the second time window), the first communication apparatus may measure the first-type downlink signal within the first time window, and send the second indication information to the second communication apparatus within the second time window.

In another possible implementation, even if the first time window does not overlap the second time window and the first communication apparatus expects to skip measuring the second-type downlink signal within the first time window, the first communication apparatus may alternatively perform steps S505 and S506. For content of S505 and S506, refer to the foregoing descriptions.

Optionally, when the first information indicates the information about the first time window and the first communication apparatus does not successfully decode the first information, the first communication apparatus cannot determine the first time window. In this case, the first communication apparatus may attempt to measure the second-type downlink signal within a preset time window or an idle time window.

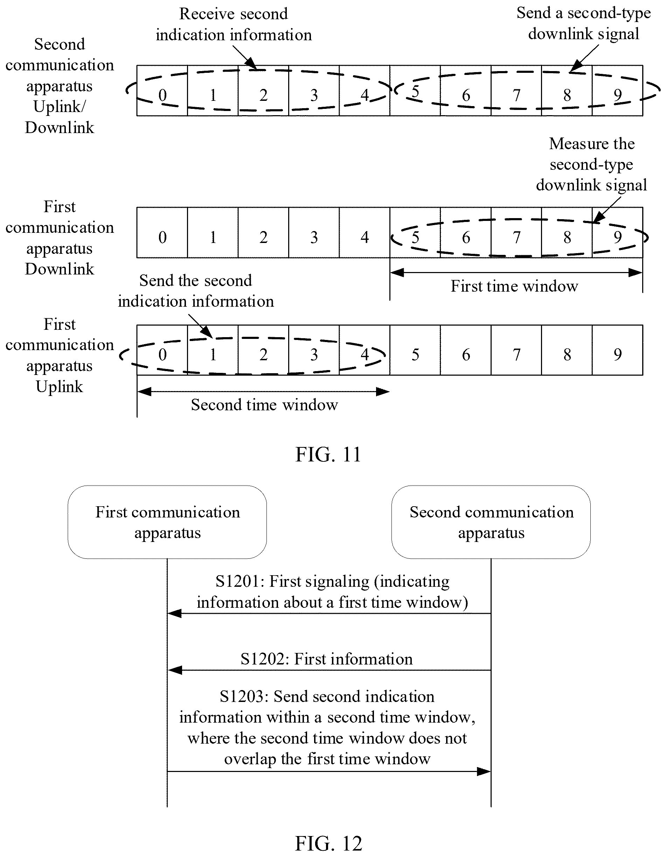

For example, FIG. 11 is a diagram of a time sequence of measuring the first-type downlink signal and sending the second indication information according to an embodiment of this application.

As shown in FIG. 11, the first time window is a subframe 5 to a subframe 9 in a frame 1, and the second time window is a subframe 0 to a subframe 4 in the frame 1. The first communication apparatus determines that the first time window does not overlap the second time window. Therefore, the first communication apparatus may send the second indication information within the first time window, and measure the second-type downlink signal within the second time window.

In the case 2, because the first communication apparatus determines that the first time window does not overlap the second time window, a success rate of measuring the first-type downlink signal by the first communication apparatus and sending the second indication information by the first communication apparatus to the second communication apparatus can be increased. In addition, when the first-type downlink signal is a GNSS signal, this helps increase a success rate of implementing uplink synchronization by the first communication apparatus.

In this embodiment of this application, if the first time window overlaps the second time window, the first communication apparatus may measure the first-type downlink signal within the first time window, and delay sending the first indication information, or the first communication apparatus may send the second indication information within the second time window, and delay measuring the first-type downlink signal. This is equivalent to coordinating a time window for measuring a downlink signal and a time window for sending indication information. This avoids a conflict between measurement of the downlink signal and sending of the indication information, helps increase a success rate of measuring the downlink signal and sending the indication information, and therefore helps improve communication reliability. In addition, if the first time window does not overlap the second time window, the first communication apparatus measures the first-type downlink signal within the first time window, and sends the second indication information within the second time window. This also helps increase a success rate of measuring the downlink signal and sending the indication information.

To avoid a conflict between sending of acknowledgement information and measurement of a downlink signal, embodiments of this application further provide a communication method. In the communication method, a second communication apparatus may send first signaling to a first communication apparatus. The first signaling indicates information about a first time window, and the first time window is used for measuring a first-type downlink signal. In addition, a second time window used for the first communication apparatus to send second indication information does not overlap (to be specific, completely does not overlap) the first time window. The second indication information indicates that the first communication apparatus has successfully decoded first information or does not successfully decode first information. This is equivalent to avoiding overlapping between the first time window and the second time window during configuration of the time windows. Therefore, a conflict between an acknowledgement information sending process and a downlink signal measurement process can be avoided.

The following describes the method provided in embodiments of this application with reference to the accompanying drawings.

During description of embodiments of this application, the technical solutions in embodiments of this application are applicable to any one of scenarios in FIG. 2 to FIG. 4. In embodiments of this application, for example, a first communication apparatus is any one of the first communication apparatuses in FIG. 2 to FIG. 4, a second communication apparatus is any one of the second communication apparatuses in FIG. 2 to FIG. 4, a ground station is any one of the ground stations in FIG. 2 to FIG. 4, and a satellite is any one of the satellites in FIG. 2 to FIG. 4. It should be understood that, if the technical solutions provided in embodiments of this application are applied to another scenario, a name, a function, and/or the like of a network element, a device, or an apparatus may vary. This is not limited in embodiments of this application.

FIG. 12 is a diagram of a communication method according to an embodiment of this application. The diagram includes the following steps.

S1201: A second communication apparatus sends first signaling to a first communication apparatus. Correspondingly, the first communication apparatus receives the first signaling from the second communication apparatus.

For a manner of sending the first signaling by the second communication apparatus to the first communication apparatus, refer to the foregoing content about sending the first information by the second communication apparatus to the first communication apparatus. The first signaling indicates information about a first time window. For content of the information about the first time window, refer to the foregoing content. Details are not described herein again. The first signaling is, for example, RRC signaling or MAC CE signaling.

Optionally, the first signaling may indicate information about P time windows. The P time windows include the first time window, where P is an integer greater than 1. The P time windows may be periodically distributed or aperiodically distributed. This is not limited in this embodiment of this application.

S1202: The second communication apparatus sends first information to the first communication apparatus. Correspondingly, the first communication apparatus receives the first information from the second communication apparatus.

For a manner of sending the first information by the second communication apparatus to the first communication apparatus, refer to the foregoing content. For an implementation form of the first information, refer to the foregoing content. Optionally, the first information indicates the information about the first time window, and/or a resource and/or a format of second indication information. For content of the second indication information and meanings of the resource and the format of the second indication information, refer to the foregoing content.

In a possible implementation, the first information indicates to trigger measurement of a first-type downlink signal. For a manner of indicating, by the first information, to trigger measurement of the first-type downlink signal, refer to the foregoing content.

In the foregoing implementation, although the second communication apparatus indicates, by using the first signaling, a time window for measuring the first-type downlink signal, the first communication apparatus may measure the first-type downlink signal after receiving the first information indicating to trigger measurement of the first-type downlink signal. In this way, a time window for measuring the first-type downlink signal by the first communication apparatus is flexible, and the second communication apparatus can also flexibly schedule a time window originally used for measuring the first-type downlink signal. This helps improve resource utilization.

S1203: The first communication apparatus sends the second indication information to the second communication apparatus within a second time window. Correspondingly, the second communication apparatus receives the second indication information from the first communication apparatus within the second time window. The second time window does not overlap the first time window.

For content of the second indication information, refer to the foregoing descriptions. For a manner of sending the second indication information by the first communication apparatus to the second communication apparatus, refer to the foregoing content about sending the first indication information by the first communication apparatus to the second communication apparatus.

Optionally, because the first time window does not conflict with the second time window, the first communication apparatus may measure the first-type downlink signal within the first time window.

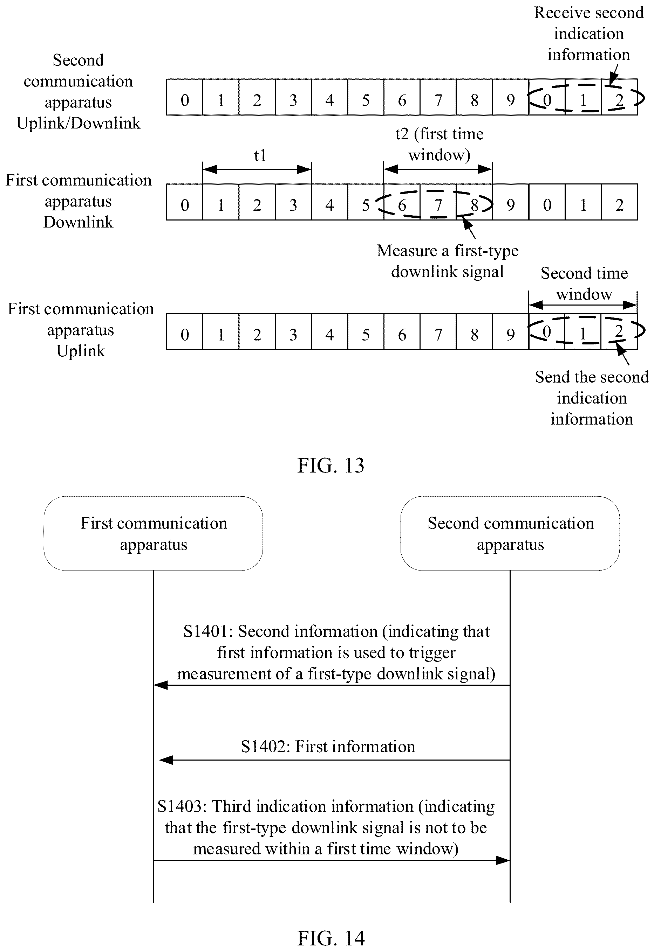

FIG. 13 is a diagram of a time sequence of measuring the first-type downlink signal and sending the second indication information according to an embodiment of this application.

As shown in FIG. 13, the first signaling indicates that the first communication apparatus may measure the first-type downlink signal within two time windows indicated by t1 and t2. A time window indicated by t1 includes a subframe 1 to a subframe 3 in a frame 1. A time window indicated by t2 is the first time window, and specifically includes a subframe 6 to a subframe 8 in the frame 1. In addition, a time window within which the first communication apparatus sends the second indication information is the second time window, and the second time window includes a subframe 0 to a subframe 2 in a frame 2. When the first communication apparatus receives the first information and the first information indicates to measure the first-type downlink signal within the first time window, the first communication apparatus may measure the first-type downlink signal within the first time window, and send the second indication information within the second time window. Because the first time window does not overlap the second time window, a process of measuring the first-type downlink signal does not conflict with a process of sending the second indication information.

In this embodiment of this application, the second communication apparatus may configure, for the first communication apparatus, the first time window and the second time window that do not overlap. This fundamentally avoids a conflict between time at which the first-type downlink signal is measured and time at which the second indication information is sent, and also helps increase a success rate of measuring the first-type downlink signal and sending the second indication information. In addition, after indicating, by using the first signaling, the time window for measuring the first-type downlink signal, the second communication apparatus may further trigger, by using the first information, measurement of the first-type downlink signal. In this way, a time window within which the first communication apparatus measures the first-type downlink signal is flexible, and the second communication apparatus can also flexibly schedule a time window.

To improve flexibility of measuring a first-type downlink signal, embodiments of this application further provide a communication method. In the communication method, even if a second communication apparatus indicates the first communication apparatus to measure the first-type downlink signal, the first communication apparatus may flexibly choose not to measure the first-type downlink signal, and notify the second communication apparatus that the first-type downlink signal is not to be measured. This improves flexibility of measuring the first-type downlink signal by the first communication apparatus.

The following describes the method provided in embodiments of this application with reference to the accompanying drawings.

During description of embodiments of this application, the technical solutions in embodiments of this application are applicable to any one of scenarios in FIG. 2 to FIG. 4. In embodiments of this application, for example, a first communication apparatus is any one of the first communication apparatuses in FIG. 2 to FIG. 4, a second communication apparatus is any one of the second communication apparatuses in FIG. 2 to FIG. 4, a ground station is any one of the ground stations in FIG. 2 to FIG. 4, and a satellite is any one of the satellites in FIG. 2 to FIG. 4. It should be understood that, if the technical solutions provided in embodiments of this application are applied to another scenario, a name, a function, and/or the like of a network element, a device, or an apparatus may vary. This is not limited in embodiments of this application.

FIG. 14 is a diagram of a communication method according to an embodiment of this application. The diagram includes the following steps.

S1401: A second communication apparatus sends second information to a first communication apparatus. Correspondingly, the first communication apparatus receives the second information from the second communication apparatus.

For example, for a manner of sending the second information by the second communication apparatus to the first communication apparatus, refer to the foregoing content about sending the first information by the second communication apparatus to the first communication apparatus. The second information indicates that the first information is used to trigger measurement of a first-type downlink signal. For content of the second information, refer to the foregoing content.

S1402: The second communication apparatus sends the first information to the first communication apparatus. Correspondingly, the first communication apparatus receives the first information from the second communication apparatus.

For example, for a manner of sending the first information by the second communication apparatus to the first communication apparatus, refer to the foregoing content. The first information indicates information about a first time window. For content of the first time window and content of the information about the first time window, refer to the foregoing content.

In an example, when S1401 is performed, step S1402 may not be performed, that is, S1402 may be an optional step; or when S1402 is performed, step S1401 may not be performed, that is, S1401 may be an optional step; or steps S1401 and S1402 may be performed.

S1403: The first communication apparatus sends third indication information to the second communication apparatus. Correspondingly, the second communication apparatus receives the third indication information from the first communication apparatus.

For a manner of sending the third indication information by the first communication apparatus to the second communication apparatus, refer to the foregoing content. The third indication information indicates that the first communication apparatus does not measure the first-type downlink signal within the first time window.

In a possible implementation, the first communication apparatus performs step S1403 after determining at least one of the following: that the first information is not successfully decoded, that the first time window overlaps a second time window, and that remaining validity duration of a first measurement result of the first-type downlink signal is greater than or equal to a first threshold. For a meaning of the first measurement result, a manner of obtaining the first threshold, and a manner of obtaining the remaining validity duration of the first measurement result, refer to the foregoing content.

In this embodiment of this application, the first communication apparatus may flexibly choose whether to perform measurement, indicated by the second communication apparatus, of the first-type downlink signal. This improves flexibility of performing measurement, indicated by the second communication apparatus, of the first-type downlink signal. In addition, the second communication apparatus may determine, in a timely manner, whether the first communication apparatus measures the first-type downlink signal; and when determining that the first communication apparatus does not measure the first-type downlink signal, release, in a timely manner, a resource for measuring the first-type downlink signal, so that the resource is used for another interaction process, to improve resource utilization.

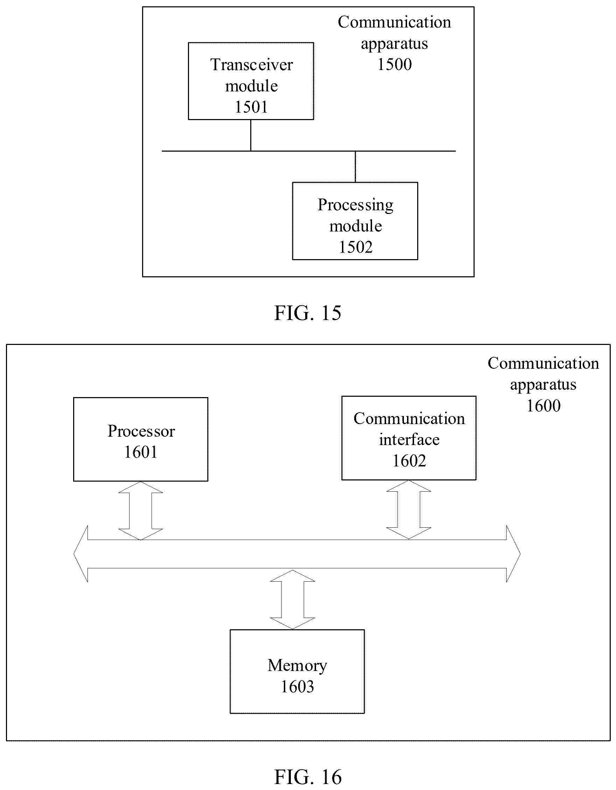

An embodiment of this application provides a communication apparatus. FIG. 15 is a diagram of a possible structure of a communication apparatus according to an embodiment of this application. As shown in FIG. 15, the communication apparatus 1500 includes a transceiver module 1501 and a processing module 1502.

In a first embodiment, the communication apparatus 1500 may be configured to implement the functions of the first communication apparatus in FIG. 5. Correspondingly, the communication apparatus 1500 may implement the steps performed by the first communication apparatus in FIG. 5.

For example, the transceiver module 1501 is configured to receive first information. The transceiver module 1501 may be further configured to send first indication information after a first time window, or send second indication information within a second time window. The processing module 1502 is configured to determine the first time window and the second time window, determine that the first time window overlaps the second time window, and measure a second-type downlink signal after the second time window.

In a second embodiment, the communication apparatus 1500 may be configured to implement the functions of the second communication apparatus in FIG. 5. Correspondingly, the communication apparatus 1500 may implement the steps performed by the second communication apparatus in FIG. 5.

For example, the transceiver module 1501 is configured to send first information to a first communication apparatus under the control of the processing module 1502. The transceiver module 1501 may be further configured to receive first indication information after a first time window, or receive second indication information within a second time window.

In a third embodiment, the communication apparatus 1500 may be configured to implement the functions of the first communication apparatus in FIG. 12. Correspondingly, the communication apparatus 1500 may be configured to implement the steps performed by the second communication apparatus in FIG. 12.

For example, the transceiver module 1501 is configured to: under the control of the processing module 1502, receive first signaling, receive first information, and send second indication information within a second time window.

In a fourth embodiment, the communication apparatus 1500 may be configured to implement the functions of the second communication apparatus in FIG. 12. Correspondingly, the communication apparatus 1500 may implement the steps performed by the second communication apparatus in FIG. 12.

For example, the transceiver module 1501 is configured to: under the control of the processing module 1502, send first signaling, send first information, and send second indication information within a second time window.

In a fifth embodiment, the communication apparatus 1500 may be configured to implement the functions of the first communication apparatus in FIG. 14. Correspondingly, the communication apparatus 1500 may be configured to implement the steps performed by the first communication apparatus in FIG. 14.

For example, the transceiver module 1501 is configured to: under the control of the processing module 1502, receive second information, receive first information, and send third indication information.

In a sixth embodiment, the communication apparatus 1500 may be configured to implement the functions of the second communication apparatus in FIG. 14. Correspondingly, the communication apparatus 1500 may be configured to implement the steps performed by the second communication apparatus in FIG. 14.

For example, the transceiver module 1501 is configured to: under the control of the processing module 1502, send second information, send first information, and receive third indication information.

An embodiment of this application provides a communication apparatus. FIG. 16 is a diagram of a possible structure of a communication apparatus according to an embodiment of this application. As shown in FIG. 16, the communication apparatus 1600 includes a processor 1601 and a communication interface 1602.

The processor 1601 and the communication interface 1602 are coupled to each other. It can be understood that the communication interface 1602 may be a transceiver or an input/output interface. The processor 1601 and the communication interface 1602 may implement any one of the foregoing communication methods, for example, the communication method in FIG. 5, FIG. 12, or FIG. 14.

In a first embodiment, the communication apparatus 1600 may be configured to implement the functions of the first communication apparatus in FIG. 5. Correspondingly, the communication apparatus 1600 may be configured to implement the steps performed by the first communication apparatus in FIG. 5.

In a first embodiment, the communication apparatus 1600 may be configured to implement the functions of the second communication apparatus in FIG. 5. Correspondingly, the communication apparatus 1600 may be configured to implement the steps performed by the second communication apparatus in FIG. 5.

In a third embodiment, the communication apparatus 1600 may be configured to implement the functions of the first communication apparatus in FIG. 12. Correspondingly, the communication apparatus 1600 may be configured to implement the steps performed by the first communication apparatus in FIG. 12.

In a fourth embodiment, the communication apparatus 1600 may be configured to implement the functions of the second communication apparatus in FIG. 12. Correspondingly, the communication apparatus 1600 may be configured to implement the steps performed by the second communication apparatus in FIG. 12.

In a fifth embodiment, the communication apparatus 1600 may be configured to implement the functions of the first communication apparatus in FIG. 14. Correspondingly, the communication apparatus 1600 may be configured to implement the steps performed by the first communication apparatus in FIG. 14.

In a sixth embodiment, the communication apparatus 1600 may be configured to implement the functions of the second communication apparatus in FIG. 14. Correspondingly, the communication apparatus 1600 may be configured to implement the steps performed by the second communication apparatus in FIG. 14.

Optionally, the communication apparatus 1600 may further include a memory 1603, configured to store instructions to be executed by the processor 1601, or store input data needed for running instructions by the processor 1601, or store data generated after the processor 1601 runs instructions. The memory 1603 may be coupled to or integrated with the processor 1601; or the memory 1603 and the processor 1601 may be disposed independently of each other. Optionally, the memory 1603 may alternatively be located outside the communication apparatus 1600. In other words, the memory 1603 may be an optional module in the communication apparatus 1600.

The memory 1603 may include a volatile memory (volatile memory), for example, a random access memory (random access memory, RAM). Alternatively, the memory may include a non-volatile memory (non-volatile memory), for example, a read-only memory (read-only memory, ROM), a flash memory, a hard disk drive (hard disk drive, HDD), or a solid-state drive (solid-state drive, SSD).

Any two of the processor 1601, the communication interface 1602, and the memory 1603 may communicate with each other through a bus. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like.

Optionally, the processor 1601 is configured to implement the functions of the processing module 1502, and the communication interface 1602 is configured to implement the functions of the transceiver module 1501.

It can be understood that the processor 1601 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application provides a communication system. The communication system may include the first communication apparatus in FIG. 5 and the second communication apparatus in FIG. 5. For steps performed by the first communication apparatus and the second communication apparatus, refer to the content shown in FIG. 5.

An embodiment of this application provides a communication system. The communication system may include the first communication apparatus in FIG. 12 and the second communication apparatus in FIG. 12. For steps performed by the first communication apparatus and the second communication apparatus, refer to the content shown in FIG. 12.

An embodiment of this application provides a communication system. The communication system may include the first communication apparatus in FIG. 14 and the second communication apparatus in FIG. 14. For steps performed by the first communication apparatus and the second communication apparatus, refer to the content shown in FIG. 14.

An embodiment of this application provides a chip system. The chip system includes a processor and an interface. The processor is configured to invoke instructions from the interface and run the instructions. When the processor executes the instructions, any one of the foregoing communication methods is implemented, for example, the communication method in FIG. 5, FIG. 12, or FIG. 14 is implemented.

An embodiment of this application provides a computer-readable storage medium. The computer-readable storage medium is configured to store a computer program or computer instructions. When the computer program or the computer instructions is/are run, any one of the foregoing communication methods is implemented, for example, the communication method in FIG. 5, FIG. 12, or FIG. 14 is implemented.

An embodiment of this application provides a computer program product including instructions. When the computer program product is run on a computer, any one of the foregoing communication methods is implemented, for example, the communication method in FIG. 5, FIG. 12, or FIG. 14 is implemented.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in a base station or a terminal as discrete components.

All or some of the foregoing embodiments may be implemented by software, hardware, firmware, or any combination thereof. When the embodiments are implemented by software, all or some of the embodiments may be implemented in a form of a computer program product. The computer program product includes one or more computer programs or instructions. When the computer programs or instructions are loaded and executed on a computer, all or some of the processes or the functions in embodiments of this application are performed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible to a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

It can be understood that various numbers in embodiments of this application are merely used for differentiation for ease of description, and are not intended to limit the scope of embodiments of this application. Sequence numbers of the foregoing processes do not mean an execution sequence. The execution sequence of the processes should be determined based on functions and internal logic of the processes.

## Claims

1. A communication method, comprising:
receiving first signaling, wherein the first signaling indicates information about a first time window, and the first time window is used for measuring a first-type downlink signal;
receiving first information; and
sending second indication information within a second time window, wherein the second time window does not overlap the first time window, and the second indication information indicates that the first information is successfully decoded or the first information is not successfully decoded.

2. A communication method, comprising:
sending first signaling, wherein the first signaling indicates information about a first time window, and the first time window is used for measuring a first-type downlink signal;
sending first information; and
sending second indication information within a second time window, wherein the second time window does not overlap the first time window, and the second indication information indicates that the first information is successfully decoded or the first information is not successfully decoded.

3. The method according to claim 1 or 2, wherein
the first time window is after the second time window.

4. The method according to any one of claims 1 to 3, wherein the first information indicates to trigger measurement of the first-type downlink signal.

5. The method according to any one of claims 1 to 4, wherein the first information indicates at least one of the following:
carrying information about the first time window; and/or
carrying a resource and/or a format of the second indication information.

6. The method according to any one of claims 1 to 5, wherein the information about the first time window comprises at least one of the following:
a start moment of the first time window;
an end moment of the first time window;
a length of the first time window;
a number of a start frame of the first time window and a number of a start subframe of the first time window;
a number of an end frame of the first time window and a number of an end subframe of the first time window; or
a quantity of subframes comprised in the first time window.

7. The method according to claim 6, wherein the number of the start subframe of the first time window is:
a number of the 1^{st} uplink subframe or the 1^{st} downlink subframe after a fifth time window that is after a reference moment;
a number of an uplink subframe corresponding to the 1^{st} downlink subframe after a fifth time window that is after a reference moment;
the 1^{st} uplink subframe or the 1^{st} downlink subframe after the fifth time window; or
a number of an uplink subframe or a downlink subframe with a minimum time interval from a moment after a fifth time window that is after a reference moment, wherein
the reference moment is a moment at which receiving of the first information ends or a moment at which sending of the second indication information ends.

8. The method according to any one of claims 1 to 7, wherein the start moment of the first time window is:
a moment after a fifth time window that is after a reference moment, wherein the reference moment is a moment at which receiving of the first information ends or a moment at which sending of the second indication information ends.

9. The method according to claim 7 or 8, wherein
a length of the fifth time window is two subframes, and the reference moment is a moment at which sending of the second indication information ends; or
a length of the fifth time window is one subframe, and the reference moment is a moment at which sending of the second indication information ends.

10. The method according to any one of claims 1 to 9, wherein the first signaling is media access control address MAC control element CE signaling.

11. The method according to any one of claims 1 to 10, wherein the first-type downlink signal is a global navigation satellite system GNSS signal or a reference signal.

12. A communication method, comprising:
receiving first information;
determining a first time window and a second time window, wherein the first time window overlaps the second time window; and
measuring a first-type downlink signal within the first time window, and sending first indication information after the first time window; or
sending second indication information within the second time window, and measuring a second-type downlink signal after the second time window, wherein
the first indication information indicates that the first-type downlink signal is successfully measured within the first time window, the first-type downlink signal is not successfully measured within the first time window, or the first information is successfully decoded; and the second indication information indicates that the first information is successfully decoded or the first information is not successfully decoded.

13. The method according to claim 12, wherein the method further comprises:
sending third indication information, wherein the third indication information indicates not to measure the second-type downlink signal within the first time window.

14. The method according to claim 12 or 13, wherein before sending the second indication information within the second time window, the method further comprises:
determining that the first information is not successfully decoded; and/or
determining that remaining validity duration of a first measurement result of the first-type downlink signal is greater than or equal to a first threshold, wherein the first measurement result is obtained by measuring the first-type downlink signal before the first time window.

15. The method according to any one of claims 12 to 14, wherein before receiving the first information, the method further comprises:
receiving second information, wherein the second information indicates that the first information is used to trigger measurement of the first-type downlink signal.

16. The method according to any one of claims 12 to 15, wherein after sending the second indication information within the second time window, the method further comprises:
if a condition is met, entering an idle state, wherein the condition comprises:
no third information is received within a third time window, wherein the third information is used to trigger measurement of the first-type downlink signal; and/or
the first-type downlink signal is not successfully measured within a fourth time window, wherein
the third time window partially or completely does not overlap the fourth time window.

17. The method according to any one of claims 12 to 16, wherein before sending the second indication information within the second time window, the method further comprises:
determining that remaining validity duration of a first measurement result of the first-type downlink signal is greater than or equal to a second threshold wherein the first measurement result is obtained by measuring the first-type downlink signal before the first time window.

18. The method according to claim 17, wherein before measuring the first-type downlink signal within the first time window, the method further comprises:
determining that the first information is successfully decoded.

19. The method according to any one of claims 12 to 18, wherein the method further comprises:
if the first time window completely does not overlap the second time window, measuring the first-type downlink signal within the first time window, and sending the second indication information within the second time window.

20. The method according to any one of claims 12 to 19, wherein before receiving the first information, the method further comprises:
receiving first signaling, wherein the first signaling indicates information about the first time window.

21. The method according to any one of claims 12 to 20, wherein the first information indicates at least one of the following:
carrying information about the first time window; and/or
carrying a resource and/or a format of the second indication information.

22. The method according to any one of claims 12 to 21, wherein the information about the first time window comprises at least one of the following:
a start moment of the first time window;
an end moment of the first time window;
a length of the first time window;
a number of a start frame of the first time window and a number of a start subframe of the first time window;
a number of an end frame of the first time window and a number of an end subframe of the first time window; or
a quantity of subframes comprised in the first time window.

23. The method according to claim 22, wherein the number of the start subframe of the first time window is:
a number of the 1^{st} uplink subframe or the 1^{st} downlink subframe after a fifth time window that is after a reference moment;
a number of an uplink subframe corresponding to the 1^{st} downlink subframe after a fifth time window that is after a reference moment;
the 1^{st} uplink subframe or the 1^{st} downlink subframe after the fifth time window; or
a number of an uplink subframe or a downlink subframe with a minimum time interval from a moment after a fifth time window that is after a reference moment, wherein
the reference moment is a moment at which receiving of the first information ends or a moment at which sending of the second indication information ends.

24. The method according to any one of claims 12 to 23, wherein the start moment of the first time window is:
a moment after a fifth time window that is after a reference moment, wherein the reference moment is a moment at which receiving of the first information ends or a moment at which sending of the second indication information ends.

25. The method according to claim 23 or 24, wherein
a length of the fifth time window is six subframes, and the reference moment is a moment at which receiving of the first information ends; or
a length of the fifth time window is five subframes, and the reference moment is a moment at which receiving of the first information ends.

26. The method according to any one of claims 12 to 25, wherein the first-type downlink signal and the second-type downlink signal are global navigation satellite system GNSS signals or reference signals.

27. A communication method, comprising:
sending first information; and
sending a first-type downlink signal within a first time window, and receiving first indication information after the first time window; or receiving second indication information within a second time window, and measuring a second-type downlink signal after the second time window, wherein
the first time window overlaps the second time window; the first indication information indicates that the first-type downlink signal is successfully measured within the first time window, the first-type downlink signal is not successfully measured within the first time window, or the first information is successfully decoded; and the second indication information indicates that the first information is successfully decoded or the first information is not successfully decoded.

28. The method according to claim 27, wherein before receiving the second indication information within the second time window, the method further comprises:
receiving third indication information, wherein the third indication information indicates not to measure the second-type downlink signal within the first time window.

29. The method according to claim 27 or 28, wherein before sending the first information, the method further comprises:
sending second information, wherein the second information indicates that the first information is used to trigger measurement of the first-type downlink signal.

30. The method according to any one of claims 27 to 29, wherein before sending the first information, the method further comprises:
sending first signaling, wherein the first signaling indicates information about the first time window.

31. The method according to any one of claims 27 to 30, wherein the first indication information indicates that the first-type downlink signal is successfully measured within a plurality of time windows or the first-type downlink signal is not successfully measured, wherein the plurality of time windows comprise the first time window.

32. The method according to any one of claims 27 to 31, wherein the first information indicates at least one of the following:
carrying information about the first time window; and/or
carrying a resource and/or a format of the second indication information.

33. The method according to any one of claims 27 to 32, wherein the information about the first time window comprises at least one of the following:
a start moment of the first time window;
an end moment of the first time window;
a length of the first time window;
a number of a start frame of the first time window and a number of a start subframe of the first time window;
a number of an end frame of the first time window and a number of an end subframe of the first time window; or
a quantity of subframes comprised in the first time window.

34. The method according to claim 33, wherein the number of the start subframe of the first time window is:
a number of the 1^{st} uplink subframe or the 1^{st} downlink subframe after a fifth time window that is after a reference moment;
a number of an uplink subframe corresponding to the 1^{st} downlink subframe after a fifth time window that is after a reference moment;
the 1^{st} uplink subframe or the 1^{st} downlink subframe after the fifth time window; or
a number of an uplink subframe or a downlink subframe with a minimum time interval from a moment after a fifth time window that is after a reference moment, wherein
the reference moment is a moment at which receiving of the first information ends or a moment at which sending of the second indication information ends.

35. The method according to any one of claims 27 to 34, wherein the start moment of the first time window is:
a moment after a fifth time window that is after a reference moment, wherein the reference moment is a moment at which receiving of the first information ends or a moment at which sending of the second indication information ends.

36. The method according to claim 34 or 35, wherein
a length of the fifth time window is six subframes, and the reference moment is a moment at which receiving of the first information ends; or
a length of the fifth time window is five subframes, and the reference moment is a moment at which receiving of the first information ends.

37. The method according to any one of claims 27 to 36, wherein the first-type downlink signal and the second-type downlink signal are global navigation satellite system GNSS signals or reference signals.

38. A communication apparatus, comprising:
a module configured to perform the method according to any one of claims 1 to 11; or
a module configured to perform the method according to any one of claims 12 to 26; or
a module configured to perform the method according to any one of claims 27 to 37.

39. A communication system, comprising:
an apparatus configured to perform the method according to any one of claim 1 and claims 3 to 11, and an apparatus configured to perform the method according to any one of claims 2 to 11; or
an apparatus configured to perform the method according to any one of claims 12 to 26, and an apparatus configured to perform the method according to any one of claims 27 to 37.

40. A communication apparatus, comprising a processor and a communication interface, wherein the communication interface is configured to receive a signal from an apparatus other than the communication apparatus and transmit the signal to the processor, or send a signal that comes from the processor to an apparatus other than the communication apparatus, and the processor executes code instructions through a logic circuit, to implement the method according to any one of claims 1 to 37.

41. A computer-readable storage medium, wherein the storage medium stores a computer program or computer instructions, and when the computer program or the computer instructions is/are executed by a communication apparatus, the method according to any one of claims 1 to 37 is implemented.
